# EUROPEAN PATENT APPLICATION

(11) **EP 3 214 807 A1**
(43) Date of publication of application: **06.09.2017**
(21) Application number: 14906896.7
(22) Date of filing: 28.11.2014
(51) Int. Cl.: H04L 12/803

(54) **SERVICE PROCESSING APPARATUS AND METHOD**

(71) Applicant: Huawei Technologies Co., Ltd., Longgang District Shenzhen, Guangdong 518129 (CN)
(72) Inventor: LI, Yan, Shenzhen Guangdong 518129 (CN)
(74) Representative: Pfenning, Meinig & Partner mbB
(86) International application number: PCT/CN2014/092417
(87) International publication number: WO 2016/082167

(57) **Abstract**

Embodiments of the present invention provide a service processing apparatus, system, and method, and relate to the field of network service processing, and the method includes: receiving, by a forwarding plane device, a packet of a first service flow; determining, by the forwarding plane device, a value-added service instance corresponding to the first service flow, and sending, by the forwarding plane device, the packet of the first service flow to the value-added service instance. In this way, a problem is resolved that a load balancer is heavily loaded because all service flow packets need to be processed by using the load balancer; and generally, the load balancer may only need to allocate a value-added service instance to the first service flow packet in a service flow, thereby relieving processing pressure of the load balancer.

## Description

### TECHNICAL FIELD

The present invention relates to the field of network service processing, and in particular, to a service processing apparatus and method.

### BACKGROUND

In the broadband access field, multiple value-added service instances may be connected in series after an access device. The value-added service instance is used to provide a value-added service for a service flow. The value-added service instance may be a physical device or a virtual device. The value-added service includes at least one of an anti-virus service, a firewall service, an application caching service, an application acceleration service, a web page optimization service, an address translation service, and a home control service.

A same value-added service may be provided by multiple value-added service instances. For example, a value-added service instance A1, a value-added service instance A2, a value-added service instance A3 are all used to provide a value-added service A. In this case, a load balancer needs to allocate a to-be-processed service flow between the three value-added service instances according to a load balancing rule. One service flow may include multiple service flow packets. When a forwarding plane device receives a service flow packet that requires processing of the value-added service A, the forwarding plane device sends the service flow packet to the load balancer, and the load balancer allocates a value-added service instance that provides the value-added service A, so as to process the service flow packet. Because a context needs to be used during processing of service flow packets of a same service flow, the service flow packets of the same service flow should always be allocated to a same value-added service instance for processing. As such, the forwarding plane device sends all service flow packets that require processing of the value-added service A to the load balancer, and the load balancer always allocates service flow packets of a same service flow to a same value-added service instance for processing.

In a process of implementing the present invention, the prior art has at least the following disadvantage:
A load balancer is heavily loaded because all service flow packets need to be processed by the load balancer.

### SUMMARY

Embodiments of the present invention provide a service processing apparatus and method, so as to resolve a problem in the background part that a load balancer is heavily loaded because all service flow packets need to be processed by using the load balancer. The technical solutions are as follows:
According to a first aspect, a service processing apparatus is provided, where the apparatus includes:
   a packet receiving module, configured to receive a packet of a first service flow;
   an instance determining module, configured to determine a value-added service instance corresponding to the first service flow; and
   a packet sending module, configured to send the packet of the first service flow to the value-added service instance.

In a first possible implementation manner of the first aspect, the instance determining module includes:
a first packet sending module, configured to send the packet of the first service flow to a load balancer; and
a forwarding information receiving module, configured to receive forwarding information sent by the load balancer, where the forwarding information is used to indicate the value-added service instance that is allocated by the load balancer and that is used to process the packet of the first service flow.

With reference to the first possible implementation manner of the first aspect, in a second possible implementation manner of the first aspect, the forwarding information receiving module includes:
a modified packet receiving unit, configured to receive a modified packet of the first service flow, where the modified packet of the first service flow includes the forwarding information, and the forwarding information is determined by the load balancer.

With reference to the first possible implementation manner of the first aspect, in a third possible implementation manner of the first aspect, the forwarding information is a first relationship entry, the first relationship entry includes a match item and an action item, the match item is used to match the packet of the first service flow, and the action item is used to indicate the value-added service instance that is used to process the packet of the first service flow.

With reference to the first possible implementation manner of the first aspect, the second possible implementation manner of the first aspect, or the third possible implementation manner of the first aspect, in a fourth possible implementation manner of the first aspect, the first packet sending module includes:
a first packet sending unit, configured to send the packet of the first service flow to the load balancer when packet information of the first service flow is not saved.

With reference to the first possible implementation manner of the first aspect, in a fifth possible implementation manner of the first aspect, the apparatus further includes:
a packet information storing module, configured to save the packet information of the first service flow.

With reference to the fourth possible implementation manner of the first aspect or the fifth possible implementation manner of the first aspect, in a sixth possible implementation manner of the first aspect, the instance determining module further includes:
a corresponding instance determining module, configured to: when the packet information of the first service flow is saved, determine, according to the saved packet information of the first service flow, the value-added service instance corresponding to the first service flow.

With reference to the fourth possible implementation manner of the first aspect, the fifth possible implementation manner of the first aspect, or the sixth possible implementation manner of the first aspect, in a seventh possible implementation manner of the first aspect, the packet information includes at least one of the following: 5-tuple information, service chain information of the packet of the first service flow, and an identifier of the value-added service instance corresponding to the first service flow, where
the 5-tuple information includes at least one of a source IP address, a destination IP address, a source port, a destination port, and a protocol number, and the service chain information is used to indicate a value-added service that needs to be executed by the packet of the first service flow.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, or the seventh possible implementation manner of the first aspect, in an eighth possible implementation manner of the first aspect, the apparatus further includes:
a packet information receiving module, configured to receive the packet information that is of the first service flow and that is sent by a control plane device.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, the seventh possible implementation manner of the first aspect, or the eighth possible implementation manner of the first aspect, in a ninth possible implementation manner of the third aspect, the packet sending module includes:
a next-hop identifier generation module, configured to generate a next-hop identifier according to the value-added service instance corresponding to the first service flow; and
a second packet sending module, configured to send the packet of the first service flow to the value-added service instance according to the next-hop identifier.

With reference to the fifth possible implementation manner of the first aspect, the sixth possible implementation manner of the first aspect, the seventh possible implementation manner of the first aspect, or the eighth possible implementation manner of the first aspect, in a tenth possible implementation manner of the first aspect, the apparatus further includes:
a first determining module, configured to determine that the packet of the first service flow is the last packet of the first service flow; and
a first deletion module, configured to delete the saved packet information of the first service flow.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, the seventh possible implementation manner of the first aspect, the eighth possible implementation manner of the first aspect, or the ninth possible implementation manner of the first aspect, in an eleventh possible implementation manner of the first aspect, the apparatus further includes:
a second determining module, configured to determine that the packet of the first service flow is the last packet of the first service flow and that a forwarding plane device is directly connected to the value-added service instance; and
a first sending module, configured to send the packet of the first service flow to the load balancer, where the packet of the first service flow is used to instruct the load balancer to delete a binding relationship between the first service flow and the value-added service instance.

With reference to the first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, the seventh possible implementation manner of the first aspect, the eighth possible implementation manner of the first aspect, or the ninth possible implementation manner of the first aspect, in a twelfth possible implementation manner of the first aspect, the apparatus further includes:
a third determining module, configured to determine that the packet of the first service flow is the last packet of the first service flow and that a forwarding plane device is directly connected to the value-added service instance;
a second sending module, configured to send the packet of the first service flow to the control plane device, where the packet of the first service flow is used to instruct the control plane device to deliver a deletion rule instruction to a forwarding plane device related to the first service flow; and
a second deletion module, configured to receive the deletion rule instruction sent by the control plane device and delete the saved packet information of the first service flow according to the deletion rule instruction.

According to a second aspect, a service processing apparatus is provided, including: a processor, configured to control a receiver to receive a packet of a first service flow; where
the processor is configured to determine a value-added service instance corresponding to the first service flow, and
the processor is further configured to control a transmitter to send the packet of the first service flow to the value-added service instance.

In a first possible implementation manner of the second aspect,
the processor is further configured to control the transmitter to send the packet of the first service flow to a load balancer; and
the processor is further configured to control the receiver to receive forwarding information sent by the load balancer, where the forwarding information is used to indicate the value-added service instance that is allocated by the load balancer and that is used to process the packet of the first service flow.

With reference to the first possible implementation manner of the second aspect, in a second possible implementation manner of the second aspect, the processor is further configured to control the receiver to receive a modified packet of the first service flow, where the modified packet of the first service flow includes the forwarding information, and the forwarding information is determined by the load balancer.

With reference to the first possible implementation manner of the second aspect, in a third possible implementation manner of the second aspect, the forwarding information is a first relationship entry, the first relationship entry includes a match item and an action item, the match item is used to match the packet of the first service flow, and the action item is used to indicate the value-added service instance that is used to process the packet of the first service flow.

With reference to the first possible implementation manner of the second aspect, the second possible implementation manner of the second aspect, the third possible implementation manner of the second aspect, in a fourth possible implementation manner of the second aspect, the processor is further configured to control, when packet information of the first service flow is not saved, the transmitter to send the packet of the first service flow to the load balancer.

With reference to the first forwarding channel of the second aspect, in a fifth possible implementation manner of the second aspect, the apparatus further includes a memory, and the processor is further configured to control the memory to save the packet information of the first service flow.

With reference to the fourth possible implementation manner of the second aspect or the fifth possible implementation manner of the second aspect, in a sixth possible implementation manner of the second aspect, the processor is further configured to: when the packet information of the first service flow is saved, determine, according to the saved packet information of the first service flow, the value-added service instance corresponding to the first service flow.

With reference to the fourth possible implementation manner of the second aspect, the fifth possible implementation manner of the second aspect, or the sixth possible implementation manner of the second aspect, in a seventh possible implementation manner of the second aspect, the packet information includes at least one of the following: 5-tuple information, service chain information of the packet of the first service flow, and an identifier of the value-added service instance corresponding to the first service flow, where
the 5-tuple information includes at least one of a source IP address, a destination IP address, a source port, a destination port, and a protocol number, and the service chain information is used to indicate a value-added service that needs to be executed by the packet of the first service flow.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, the sixth possible implementation manner of the second aspect, or the seventh possible implementation manner of the second aspect, in an eighth possible implementation manner of the second aspect, the processor is further configured to control the receiver to receive the packet information that is of the first service flow and that is sent by a control plane device.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, the sixth possible implementation manner of the second aspect, the seventh possible implementation manner of the second aspect, or the eighth possible implementation manner of the second aspect, in a ninth possible implementation manner of the second aspect, the processor is further configured to generate a next-hop identifier according to the value-added service instance corresponding to the first service flow; and
the processor is further configured to control the transmitter to send the packet of the first service flow to the value-added service instance according to the next-hop identifier.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, the sixth possible implementation manner of the second aspect, the seventh possible implementation manner of the second aspect, the eighth possible implementation manner of the second aspect, or the ninth possible implementation manner of the second aspect, in a tenth possible implementation manner of the second aspect, the apparatus further includes a memory, the processor is further configured to determine that the packet of the first service flow is the last packet of the first service flow; and
the processor is further configured to control the memory to delete the saved packet information of the first service flow.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, the sixth possible implementation manner of the second aspect, the seventh possible implementation manner of the second aspect, the eighth possible implementation manner of the second aspect, or the ninth possible implementation manner of the second aspect, in an eleventh possible implementation manner of the second aspect, the processor is further configured to determine that the packet of the first service flow is the last packet of the first service flow and that a forwarding plane device is directly connected to the value-added service instance; and
the processor is further configured to control the transmitter to send the packet of the first service flow to the load balancer, where the packet of the first service flow is used to instruct the load balancer to delete a binding relationship between the first service flow and the value-added service instance.

With reference to the second aspect, the first possible implementation manner of the second aspect, the second possible implementation manner of the second aspect, the third possible implementation manner of the second aspect, the fourth possible implementation manner of the second aspect, the fifth possible implementation manner of the second aspect, the sixth possible implementation manner of the second aspect, the seventh possible implementation manner of the second aspect, the eighth possible implementation manner of the second aspect, or the ninth possible implementation manner of the second aspect, in a twelfth possible implementation manner of the second aspect, the processor is further configured to determine that the packet of the first service flow is the last packet of the first service flow and that a forwarding plane device is directly connected to the value-added service instance;
the processor is further configured to control the transmitter to send the packet of the first service flow to the control plane device, where the packet of the first service flow is used to instruct the control plane device to deliver a deletion rule instruction to a forwarding plane device related to the first service flow; and
the processor is further configured to control the receiver to receive the deletion rule instruction sent by the control plane device and delete the saved packet information of the first service flow according to the deletion rule instruction.

According to a third aspect, a service processing method is provided, and the method includes:
receiving, by a forwarding plane device, a packet of a first service flow;
determining, by the forwarding plane device, a value-added service instance corresponding to the first service flow, and
sending, by the forwarding plane device, the packet of the first service flow to the value-added service instance.

In a first possible implementation manner of the third aspect, the determining, by the forwarding plane device, a value-added service instance corresponding to the first service flow includes:
sending, by the forwarding plane device, the packet of the first service flow to a load balancer; and
receiving, by the forwarding plane device, forwarding information sent by the load balancer, where the forwarding information is used to indicate the value-added service instance that is allocated by the load balancer and that is used to process the packet of the first service flow.

With reference to the first possible implementation manner of the third aspect, in a second possible implementation manner of the third aspect,
the receiving, by the forwarding plane device, forwarding information sent by the load balancer includes:
receiving, by the forwarding plane device, a modified packet of the first service flow, where the modified packet of the first service flow includes the forwarding information, and the forwarding information is determined by the load balancer.

With reference to the first possible implementation manner of the third aspect, in a third possible implementation manner of the third aspect, the forwarding information is a first relationship entry, the first relationship entry includes a match item and an action item, the match item is used to match the packet of the first service flow, and the action item is used to indicate the value-added service instance that is used to process the packet of the first service flow.

With reference to the first possible implementation manner of the third aspect, the second possible implementation manner of the third aspect, or the third possible implementation manner of the third aspect, in a fourth possible implementation manner of the third aspect, the sending, by the forwarding plane device, the packet of the first service flow to a load balancer includes:
sending, by the forwarding plane device, the packet of the first service flow to the load balancer when packet information of the first service flow is not saved.

With reference to the first possible implementation manner of the third aspect, in a fifth possible implementation manner of the third aspect, the method further includes:
storing, by the forwarding plane device, the packet information of the first service flow.

With reference to the fourth possible implementation manner of the third aspect or the fifth possible implementation manner of the third aspect, in a sixth possible implementation manner of the third aspect, the determining, by the forwarding plane device, a value-added service instance corresponding to the first service flow further includes:
when the packet information of the first service flow is saved, determining, by the forwarding plane device according to the saved packet information of the first service flow, the value-added service instance corresponding to the first service flow.

With reference to the fourth possible implementation manner of the third aspect, the fifth possible implementation manner of the third aspect, or the sixth possible implementation manner of the third aspect, in a seventh possible implementation manner of the third aspect, the packet information includes at least one of the following: 5-tuple information, service chain information of the packet of the first service flow, and an identifier of the value-added service instance corresponding to the first service flow, where
the 5-tuple information includes at least one of a source IP address, a destination IP address, a source port, a destination port, and a protocol number, and the service chain information is used to indicate a value-added service that needs to be executed by the packet of the first service flow.

With reference to the third aspect, the second possible implementation manner of the first aspect, the second possible implementation manner of the third aspect, the third possible implementation manner of the third aspect, the fourth possible implementation manner of the third aspect, the fifth possible implementation manner of the third aspect, the sixth possible implementation manner of the third aspect, or the seventh possible implementation manner of the third aspect, in an eighth possible implementation manner of the third aspect, before the receiving, by a forwarding plane device, a packet of a first service flow, the method further includes:
receiving, by the forwarding plane device, the packet information that is of the first service flow and that is sent by a control plane device.

With reference to the third aspect, the first possible implementation manner of the third aspect, the second possible implementation manner of the third aspect, the third possible implementation manner of the third aspect, the fourth possible implementation manner of the third aspect, the fifth possible implementation manner of the third aspect, the sixth possible implementation manner of the third aspect, the seventh possible implementation manner of the third aspect, or the eighth possible implementation manner of the third aspect, in a ninth possible implementation manner of the third aspect, the sending, by the forwarding plane device, the packet of the first service flow to the value-added service instance includes:
generating, by the forwarding plane device, a next-hop identifier according to the value-added service instance corresponding to the first service flow; and
sending, by the forwarding plane device, the packet of the first service flow to the value-added service instance according to the next-hop identifier.

With reference to the fifth possible implementation manner of the third aspect, the sixth possible implementation manner of the third aspect, the seventh possible implementation manner of the third aspect, or the eighth possible implementation manner of the third aspect, in a tenth possible implementation manner of the third aspect, after the sending, by the forwarding plane device, the packet of the first service flow to the value-added service instance, the method further includes:
determining, by the forwarding plane device, that the packet of the first service flow is the last packet of the first service flow; and
deleting, by the forwarding plane device, the saved packet information of the first service flow.

With reference to the third aspect, the first possible implementation manner of the third aspect, the second possible implementation manner of the third aspect, the third possible implementation manner of the third aspect, the fourth possible implementation manner of the third aspect, the fifth possible implementation manner of the third aspect, the sixth possible implementation manner of the third aspect, the seventh possible implementation manner of the third aspect, the eighth possible implementation manner of the third aspect, or the ninth possible implementation manner of the third aspect, in an eleventh possible implementation manner of the third aspect, the method further includes:
determining, by the forwarding plane device, that the packet of the first service flow is the last packet of the first service flow and that the forwarding plane device is directly connected to the value-added service instance; and
sending, by the forwarding plane device, the packet of the first service flow to the load balancer, where the packet of the first service flow is used to instruct the load balancer to delete a binding relationship between the first service flow and the value-added service instance.

With reference to the third aspect, the first possible implementation manner of the third aspect, the second possible implementation manner of the third aspect, the third possible implementation manner of the third aspect, the fourth possible implementation manner of the third aspect, the fifth possible implementation manner of the third aspect, the sixth possible implementation manner of the third aspect, the seventh possible implementation manner of the third aspect, the eighth possible implementation manner of the third aspect, or the ninth possible implementation manner of the third aspect, in a twelfth possible implementation manner of the third aspect, the method further includes:
determining, by the forwarding plane device, that the packet of the first service flow is the last packet of the first service flow and that the forwarding plane device is directly connected to the value-added service instance;
sending, by the forwarding plane device, the packet of the first service flow to the control plane device, where the packet of the first service flow is used to instruct the control plane device to deliver a deletion rule instruction to a forwarding plane device related to the first service flow; and
receiving, by the forwarding plane device, the deletion rule instruction sent by the control plane device and delete the saved packet information of the first service flow according to the deletion rule instruction.

Beneficial effects of the technical solutions provided in the embodiments of the present invention are as follows:
A forwarding plane device receives a packet of a first service flow; the forwarding plane device determines a value-added service instance corresponding to the first service flow; and the forwarding plane device sends the packet of the first service flow to the value-added service instance. In this way, a problem is resolved that a load balancer is heavily loaded because all service flow packets need to be processed by using the load balancer; and generally, the load balancer may only need to allocate a value-added service instance to the first service flow packet in a service flow, thereby relieving processing pressure of the load balancer.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of an implementation environment related to a service processing method according to an embodiment of the present invention;
FIG. 2 is a structural block diagram of a service processing apparatus according to an embodiment of the present invention;
FIG. 3A and FIG. 3B are a structural block diagram of a service processing apparatus according to another embodiment of the present invention;
FIG. 4A is a block diagram of a service processing apparatus according to an embodiment of the present invention;
FIG. 4B is a block diagram of a service processing apparatus according to another embodiment of the present invention;
FIG. 5 is a flowchart of a service processing method according to an embodiment of the present invention;
FIG. 6A is a flowchart of a service processing method according to another embodiment of the present invention;
FIG. 6B-1 and FIG. 6B-2 are a flowchart of a service processing method according to still another embodiment of the present invention;

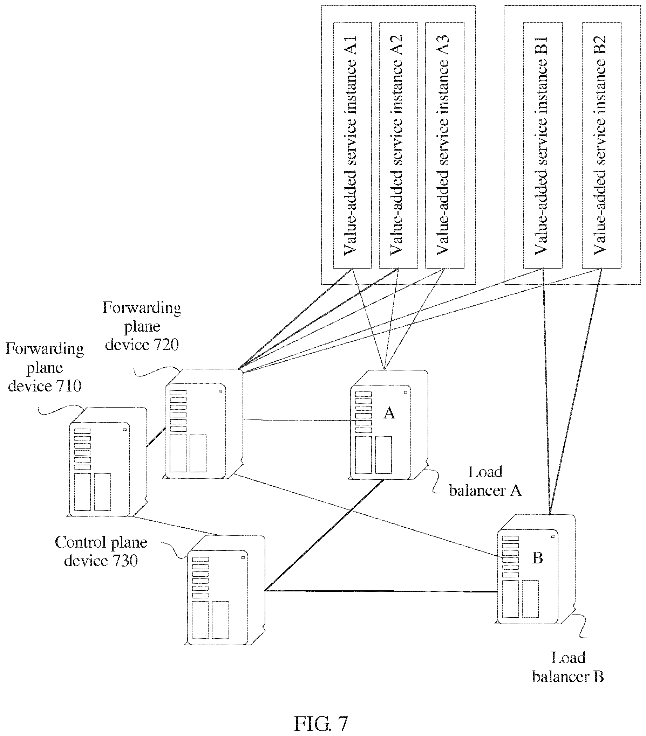

FIG. 7 is a schematic structural diagram of an implementation environment related to a service processing method according to another embodiment of the present invention;

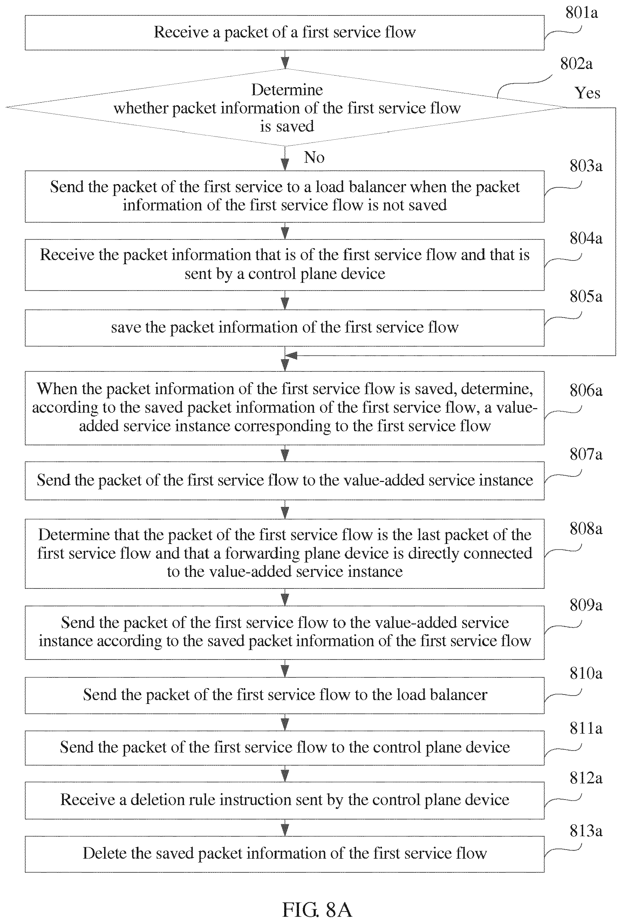

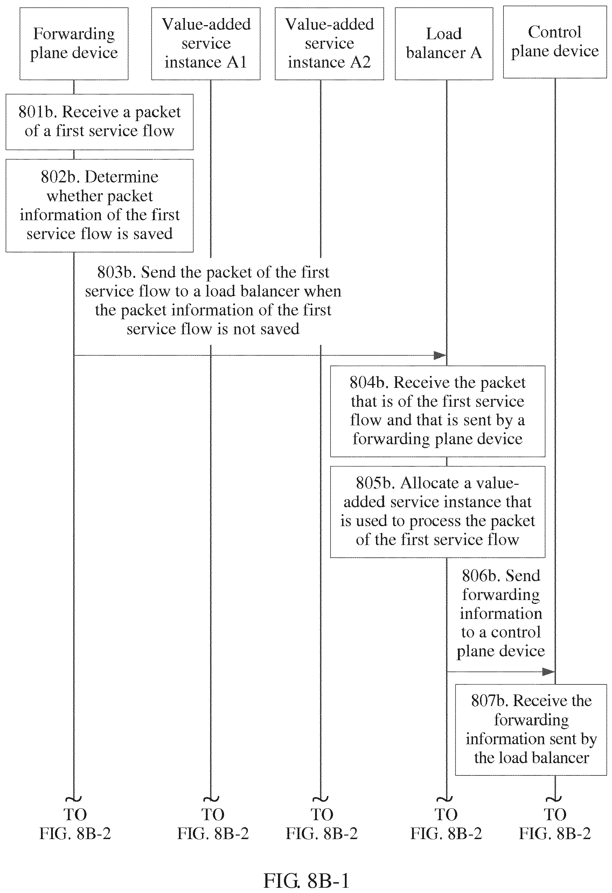

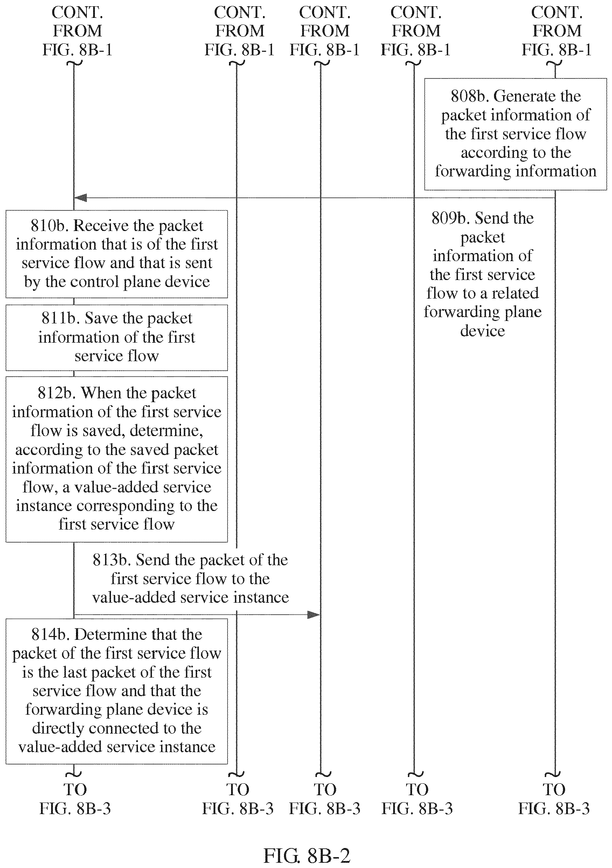

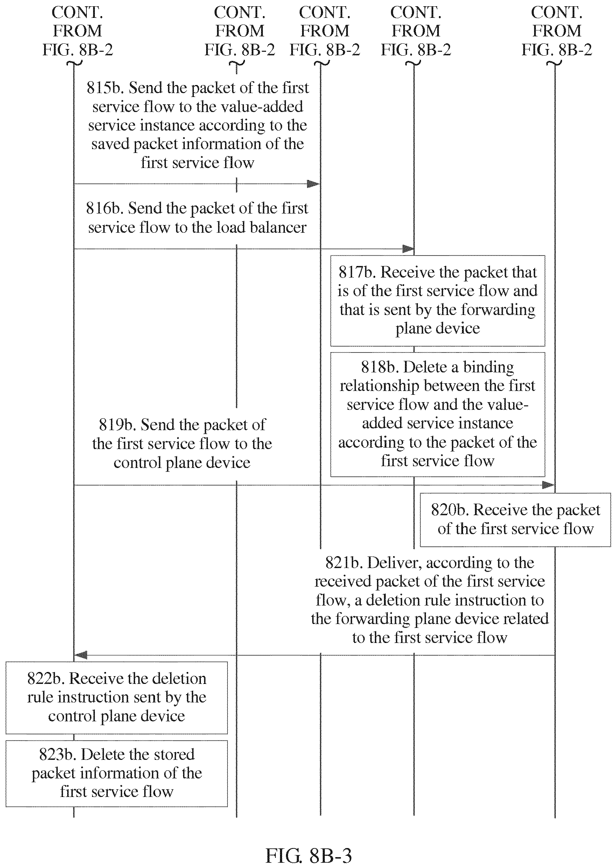

FIG. 8A is a schematic structural diagram of an implementation environment related to a service processing method according to yet another embodiment of the present invention;
FIG. 8B-1, FIG. 8B-2, and FIG. 8B-3 are a schematic structural diagram of an implementation environment related to a service processing method according to still yet another embodiment of the present invention;

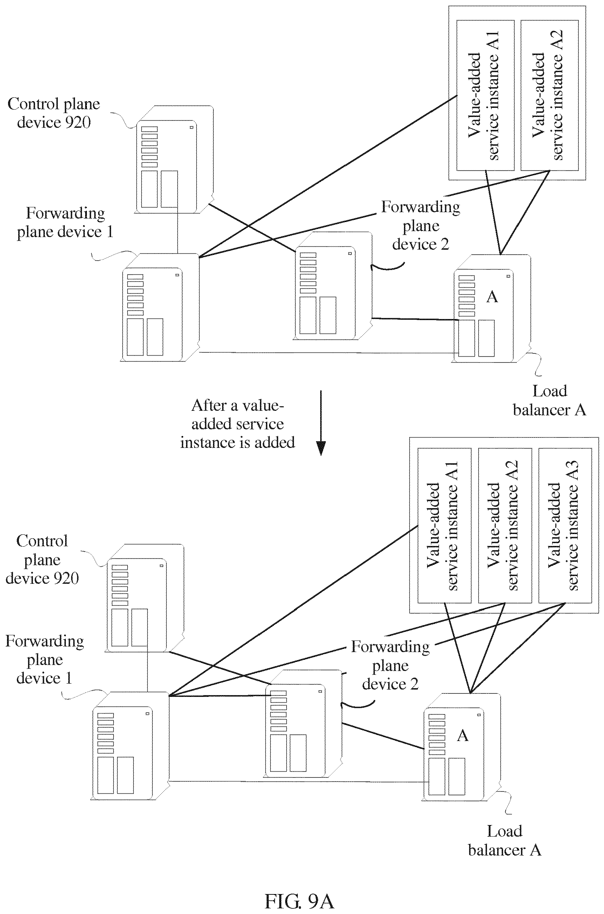

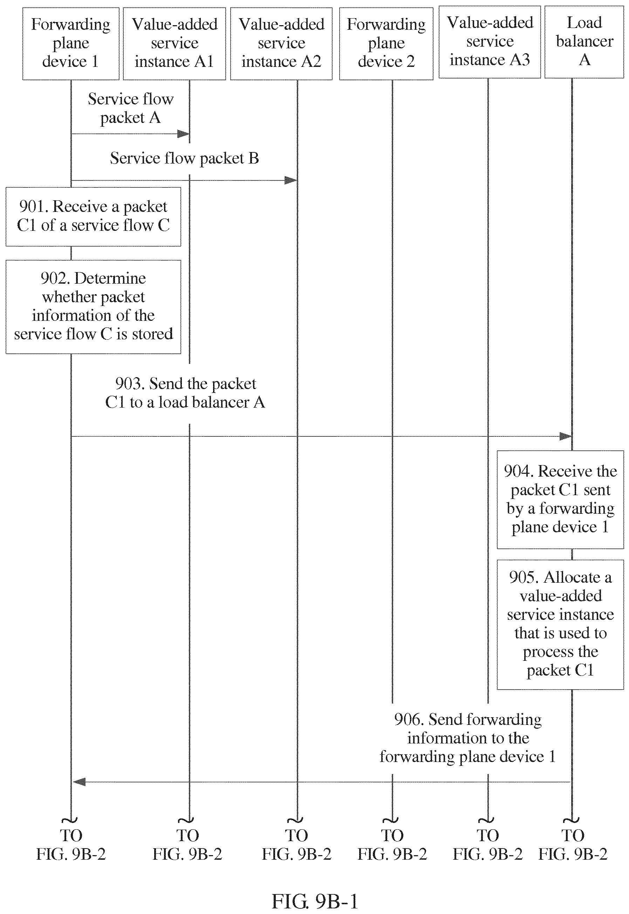

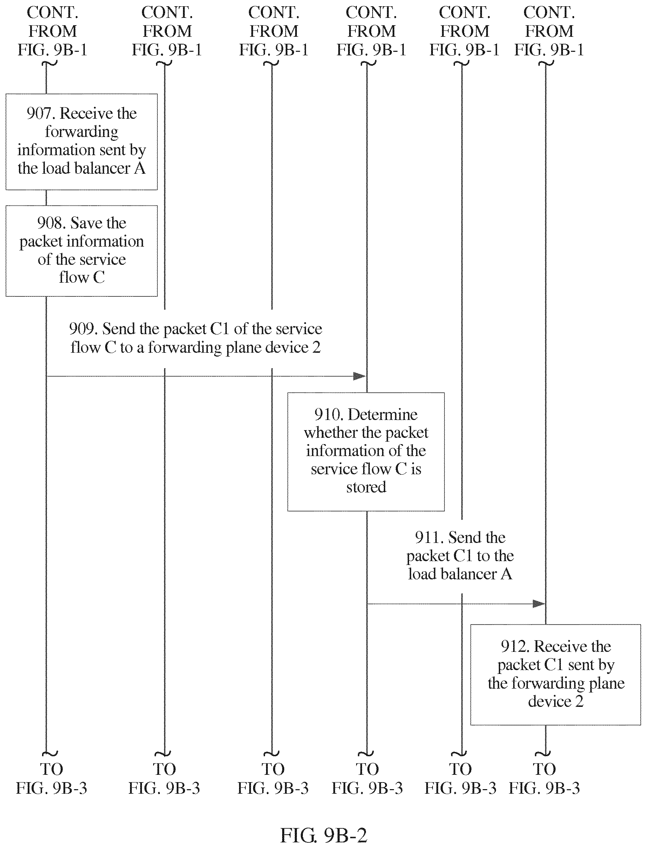

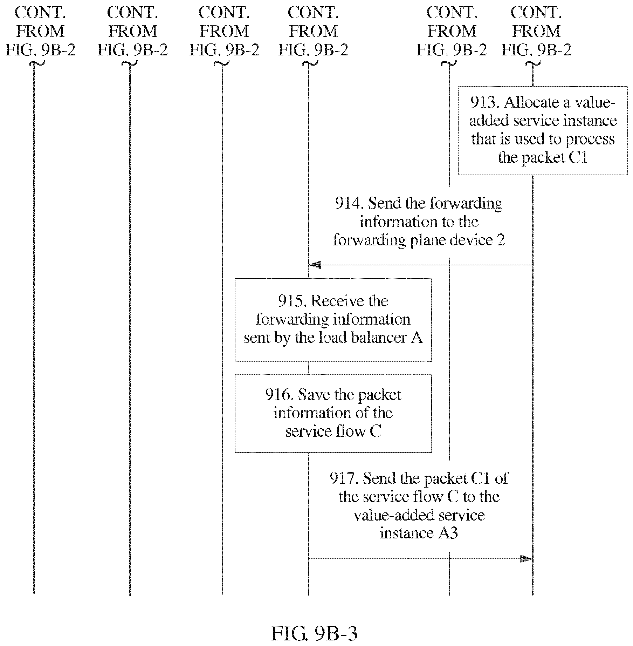

FIG. 9A is a schematic structural diagram of an implementation environment related to a service processing method according to still another embodiment of the present invention;
FIG. 9B-1, FIG. 9B-2, and FIG. 9B-3 are a flowchart of a service processing method according to a further embodiment of the present invention; and

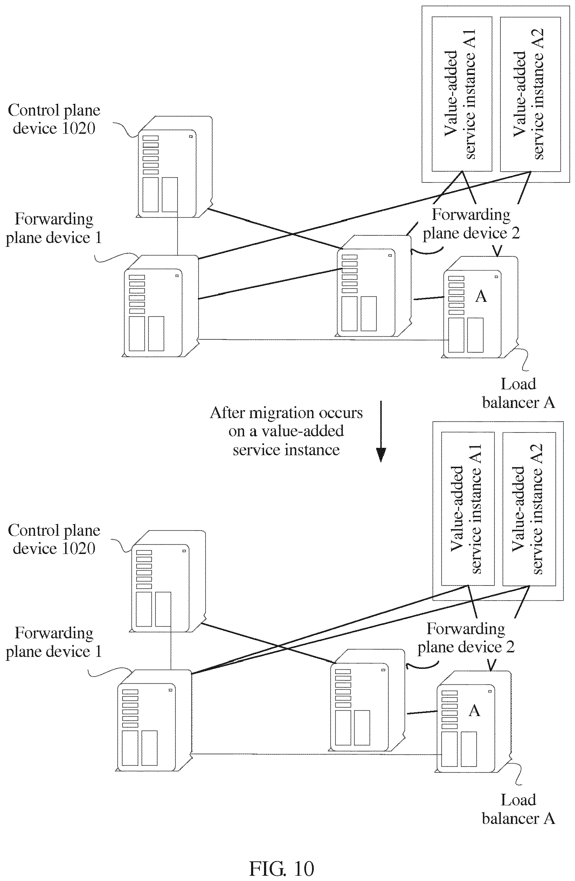

FIG. 10 is a schematic structural diagram of an implementation environment related to a service processing method according to yet another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

For ease of understanding, first, some terms that appear in the embodiments of the present invention are explained:
Service flow: generally includes multiple service flow packets; and the last service flow packet of each service flow carries an end identifier. All service flow packets of a same service flow have same 5-tuple information, and service flow packets of different service flows have different 5-tuple information.

5-tuple information: includes at least one of a source IP address, a destination IP address, a source port, a destination port, and a protocol number, so as to distinguish between different services.

Value-added service: a value-added service provided for a service flow, where the value-added service includes at least one of an anti-virus service, a firewall service, an application caching service, an application acceleration service, a web page optimization service, an address translation service, and a home control service.

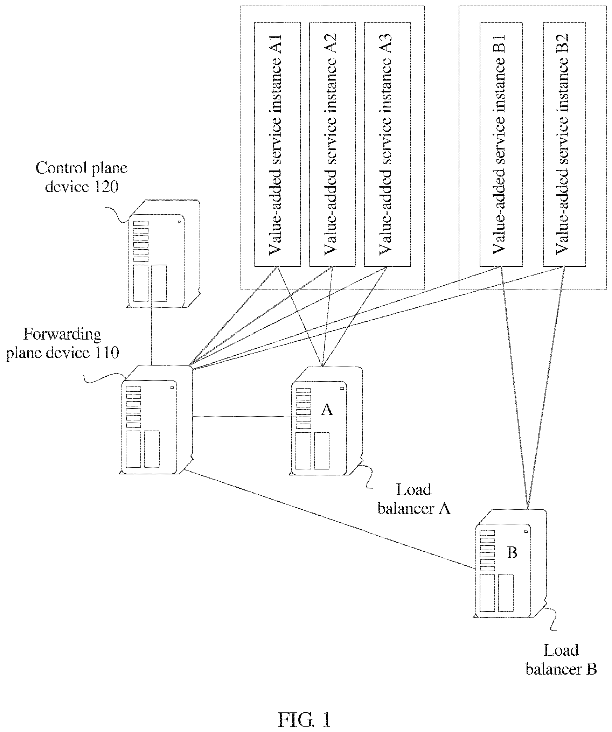

Referring to FIG. 1, FIG. 1 shows a schematic structural diagram of an implementation environment related to a service processing method according to an embodiment of the present invention. The implementation environment includes a forwarding plane device 110, a control plane device 120, a load balancer A, a load balancer B, a value-added service instance A1, a value-added service instance A2, a value-added service instance A3, a value-added service instance B1, and a value-added service instance B2.

The forwarding plane device 110 is generally a router or a switch, and the forwarding plane device 110 is connected to the control plane device 120, the load balancer A, the load balancer B, the value-added service instance A1, the value-added service instance A2, the value-added service instance A3, the value-added service instance B1, and the value-added service instance B2. The forwarding plane device 110 is configured to forward a service flow packet.

The control plane device 120 is configured to manage the forwarding plane device 110, and the control plane device 120 is connected to the forwarding plane device 110 by using a wired network or a wireless network.

The value-added service instance A1, the value-added service instance A2, and the value-added service instance A3 are all configured to provide a value-added service A for a service flow. The value-added service instance A1, the value-added service instance A2, and the value-added service instance A3 are connected to the forwarding plane device 110 and the load balancer A.

The load balancer A is configured to allocate, according to a load balancing rule and load statuses of the value-added service instance A1, the value-added service instance A2, and the value-added service instance A3, a value-added service instance to a service flow that requires the value-added service A. The load balancer A is further connected to the forwarding plane device 110.

The value-added service instance B1 and the value-added service instance B2 are both configured to provide a value-added service B for a service flow. The value-added service instance B1 and the value-added service instance B2 are connected to the forwarding plane device 110 and the load balancer B.

The load balancer B is configured to allocate, according to a load balancing rule and load statuses of the value-added service instance B1 and the value-added service instance B2, a value-added service instance to a service flow that requires the value-added service B. The load balancer B is further connected to the forwarding plane device 110.

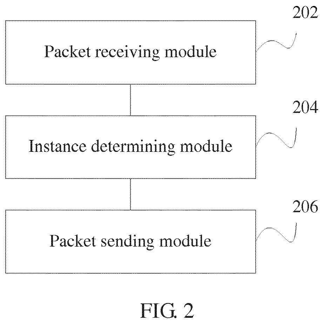

Referring to FIG. 2, FIG. 2 shows a structural block diagram of a service processing apparatus according to an embodiment of the present invention. The service processing apparatus may be implemented to be a part or all of a forwarding plane device by using software, hardware, or a combination thereof. The service processing apparatus includes:
a packet receiving module 202, configured to receive a packet of a first service flow;
an instance determining module 204, configured to determine a value-added service instance corresponding to the first service flow; and
a packet sending module 206, configured to send the packet of the first service flow to the value-added service instance.

In conclusion, in this embodiment, a forwarding plane device receives a packet of a first service flow; the forwarding plane device determines a value-added service instance corresponding to the first service flow; and the forwarding plane device sends the packet of the first service flow to the value-added service instance. In this way, a problem is resolved that a load balancer is heavily loaded because all service flow packets need to be processed by using the load balancer. In this embodiment, the determined value-added service instance corresponding to the first service flow may be generated by using the load balancer, and after the value-added service instance is determined, a subsequent packet of the first service flow does not need to pass through the load balancer. In this way, generally, the load balancer may only need to allocate a value-added service instance to the first service flow packet in a service flow, thereby relieving processing pressure of the load balancer.

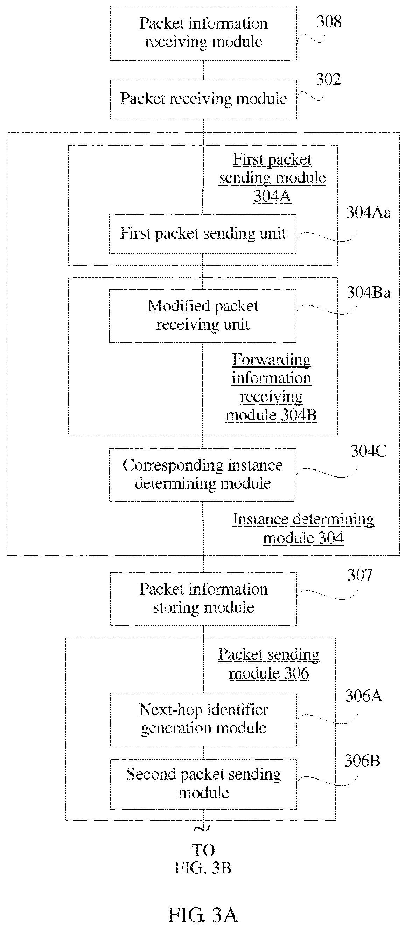

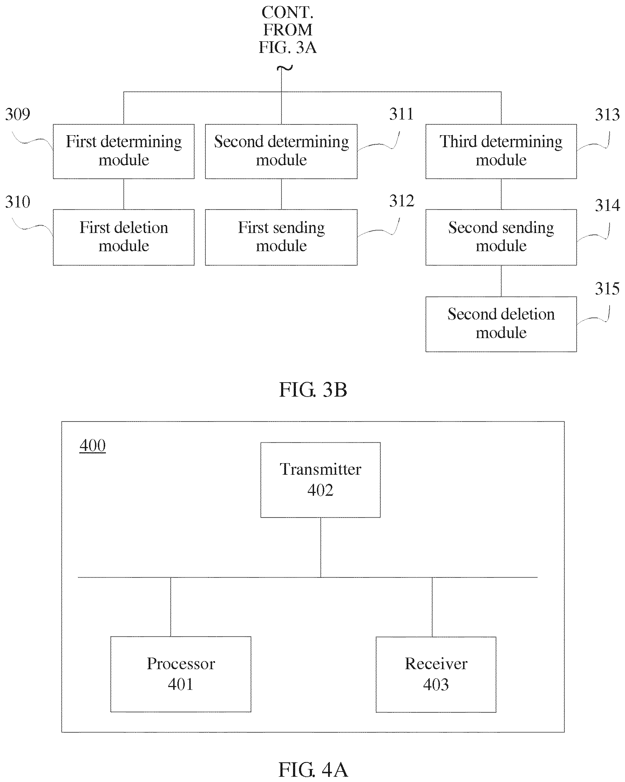

Referring to FIG. 3A and FIG. 3B, FIG. 3A and FIG. 3B show a structural block diagram of a service processing apparatus according to another embodiment of the present invention. The service processing apparatus may be implemented to be a part or all of a forwarding plane device by using software, hardware, or a combination thereof. The service processing apparatus includes:
a packet receiving module 302, configured to receive a packet of a first service flow;
an instance determining module 304, configured to determine a value-added service instance corresponding to the first service flow; and
a packet sending module 306, configured to send the packet of the first service flow to the value-added service instance.

Optionally, the instance determining module 304 includes:
a first packet sending module 304A, configured to send the packet of the first service flow to a load balancer; and
a forwarding information receiving module 304B, configured to receive forwarding information sent by the load balancer, where the forwarding information is used to indicate the value-added service instance that is allocated by the load balancer and that is used to process the packet of the first service flow.

Optionally, the forwarding information receiving module 304B includes:
a modified packet receiving unit 304Ba, configured to receive a modified packet of the first service flow, where the modified packet of the first service flow includes the forwarding information, and the forwarding information is determined by the load balancer.

Optionally, the forwarding plane device receives the modified packet of the first service flow, where the modified packet of the first service flow includes the forwarding information, and the forwarding information is determined by the load balancer.

Optionally, the first packet sending module 304A includes:
a first packet sending unit 304Aa, configured to send the packet of the first service flow to the load balancer when packet information of the first service flow is not saved.

Optionally, the apparatus further includes:
a packet information storing module 307, configured to save the packet information of the first service flow.

Optionally, the instance determining module 304 further includes:
a corresponding instance determining module 304C, configured to: when the packet information of the first service flow is saved, determine, according to the saved packet information of the first service flow, the value-added service instance corresponding to the first service flow.

Optionally, the packet information includes at least one of the following: 5-tuple information, service chain information of the packet of the first service flow, and an identifier of the value-added service instance corresponding to the first service flow.

The 5-tuple information includes at least one of a source IP address, a destination IP address, a source port, a destination port, and a protocol number, and the service chain information is used to indicate a value-added service that needs to be executed by the packet of the first service flow.

Optionally, the apparatus further includes:
a packet information receiving module 308, configured to receive the packet information that is of the first service flow and that is sent by a control plane device.

Optionally, the packet sending module 306 includes:
a next-hop identifier generation module 306A, configured to generate a next-hop identifier according to the value-added service instance corresponding to the first service flow; and
a second packet sending module 306B, configured to send the packet of the first service flow to the value-added service instance according to the next-hop identifier.

Optionally, the apparatus further includes:
a first determining module 309, configured to determine that the packet of the first service flow is the last packet of the first service flow; and
a first deletion module 310, configured to delete the saved packet information of the first service flow.

Optionally, the apparatus further includes:
a second determining module 311, configured to determine that the packet of the first service flow is the last packet of the first service flow and that a forwarding plane device is directly connected to the value-added service instance; and
a first sending module 312, configured to send the packet of the first service flow to the load balancer, where the packet of the first service flow is used to instruct the load balancer to delete a binding relationship between the first service flow and the value-added service instance.

Optionally, the apparatus further includes:
a third determining module 313, configured to determine that the packet of the first service flow is the last packet of the first service flow and that a forwarding plane device is directly connected to the value-added service instance;
a second sending module 314, configured to send the packet of the first service flow to the control plane device, where the packet of the first service flow is used to instruct the control plane device to deliver a deletion rule instruction to a forwarding plane device related to the first service flow; and
a second deletion module 315, configured to receive the deletion rule instruction sent by the control plane device and delete the saved packet information of the first service flow according to the deletion rule instruction.

In conclusion, in this embodiment, a forwarding plane device sends a packet of a first service flow; the forwarding plane device determines a value-added service instance corresponding to the first service flow; and the forwarding plane device sends the packet of the first service flow to the value-added service instance. In this way, a problem is resolved that a load balancer is heavily loaded because all service flow packets need to be processed by using the load balancer; and generally, the load balancer may only need to allocate a value-added service instance to the first service flow packet in a service flow, thereby relieving processing pressure of the load balancer.

In addition, in this embodiment, when the received packet of the first service flow is the last service flow packet in the first service flow, the forwarding plane device deletes packet information of the first service flow, and instructs the load balancer to delete a binding relationship between the first service flow and the value-added service instance. In this way, a problem is resolved that when previous and current service flows have same 5-tuple information, the load balancer may directly allocate a value-added service instance to a service flow according to a recorded binding relationship, instead of performing value-added service instance selection.

Referring to FIG. 4A, FIG. 4A shows a block diagram of a service processing apparatus according to an embodiment of the present invention. The service processing apparatus 400 may include: a processor 401, a transmitter 402, and a receiver 403. The processor 401 is electrically connected to the transmitter 402 and the receiver 403.

The processor 401 is configured to control the receiver 403 to receive a packet of the first service flow.

The processor 401 is configured to determine a value-added service instance corresponding to the first service flow.

The processor 401 is configured to control the transmitter 402 to send the packet of the first service flow to the value-added service instance.

In conclusion, in this embodiment, a forwarding plane device sends a packet of a first service flow; the forwarding plane device determines a value-added service instance corresponding to the first service flow; and the forwarding plane device sends the packet of the first service flow to the value-added service instance. In this way, a problem is resolved that a load balancer is heavily loaded because all service flow packets need to be processed by using the load balancer; and generally, the load balancer may only need to allocate a value-added service instance to the first service flow packet in a service flow, thereby relieving processing pressure of the load balancer.

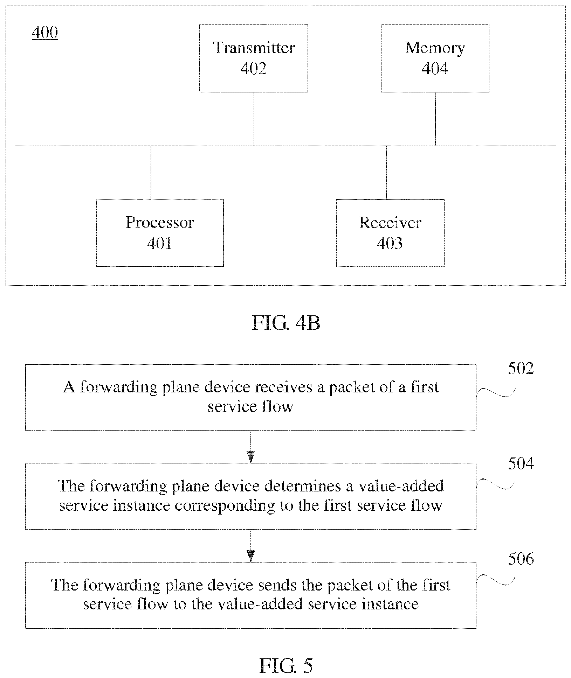

On the basis of the service processing apparatus shown in FIG. 4A, as shown in FIG. 4B, the apparatus further includes a memory 404, and the processor 401 is electrically connected to the transmitter 402, the receiver 403, and the memory 404.

The processor 401 is configured to control the receiver 403 to receive a packet of the first service flow.

The processor 401 is configured to determine a value-added service instance corresponding to the first service flow.

The processor 401 is configured to control the transmitter 402 to send the packet of the first service flow to the value-added service instance.

Specifically, when the value-added service instance is determined, the processor 401 is configured to control the transmitter 402 to send the packet of the first service flow to the load balancer.

The processor 401 is configured to control the receiver 403 to receive forwarding information sent by the load balancer, where the forwarding information is used to indicate the value-added service instance that is allocated by the load balancer and that is used to process the packet of the first service flow.

The processor 401 is configured to control the receiver 403 to receive a modified packet of the first service flow, where the modified packet of the first service flow includes the forwarding information, and the forwarding information is determined by the load balancer.

The processor 401 is configured to control, when packet information of the first service flow is not saved, the transmitter 402 to send the packet of the first service flow to the load balancer.

The processor 401 is configured to control the memory 404 to save the packet information of the first service flow.

The processor 401 is configured to: when the packet information of the first service flow is saved, determine, according to the saved packet information of the first service flow, the value-added service instance corresponding to the first service flow.

The processor 401 is configured to control the receiver 403 to receive the packet information that is of the first service flow and that is sent by the control plane device.

Specifically, when sending the packet to the value-added service instance, the processor 401 is configured to generate a next-hop identifier according to the value-added service instance corresponding to the first service flow.

The processor 401 is configured to control the transmitter 402 to send the packet of the first service flow to the value-added service instance according to the next-hop identifier.

The processor 401 is configured to determine that the packet of the first service flow is the last packet of the first service flow.

The processor 401 is configured to control the memory 404 to delete the saved packet information of the first service flow.

The processor 401 is configured to determine that the packet of the first service flow is the last packet of the first service flow and that a forwarding plane device is directly connected to the value-added service instance.

The processor 401 is configured to control the transmitter 402 to send the packet of the first service flow to the load balancer, where the packet of the first service flow is used to instruct the load balancer to delete a binding relationship between the first service flow and the value-added service instance.

The processor 401 is configured to determine that the packet of the first service flow is the last packet of the first service flow and that a forwarding plane device is directly connected to the value-added service instance.

The processor 401 is configured to control the transmitter 402 to send the packet of the first service flow to the control plane device, where the packet of the first service flow is used to instruct the control plane device to deliver a deletion rule instruction to a forwarding plane device related to the first service flow.

The processor 401 is configured to control the receiver 403 to receive the deletion rule instruction sent by the control plane device and delete the saved packet information of the first service flow according to the deletion rule instruction.

In conclusion, in this embodiment, a forwarding plane device sends a packet of a first service flow; the forwarding plane device determines a value-added service instance corresponding to the first service flow; and the forwarding plane device sends the packet of the first service flow to the value-added service instance. In this way, a problem is resolved that a load balancer is heavily loaded because all service flow packets need to be processed by using the load balancer; and generally, the load balancer may only need to allocate a value-added service instance to the first service flow packet in a service flow, thereby relieving processing pressure of the load balancer.

Referring to FIG. 5, FIG. 5 shows a flowchart of a service processing method according to an embodiment of the present invention. In this embodiment, an example in which the service processing method is applied in the forwarding plane device shown in FIG. 1 is used for description, and the method may include the following steps:
Step 502: The forwarding plane device receives a packet of a first service flow.
Step 504: The forwarding plane device determines a value-added service instance corresponding to the first service flow.
Step 506: The forwarding plane device sends the packet of the first service flow to the value-added service instance.

In conclusion, in this embodiment, a forwarding plane device receives a packet of a first service flow; the forwarding plane device determines a value-added service instance corresponding to the first service flow; and the forwarding plane device sends the packet of the first service flow to the value-added service instance. In this way, a problem is resolved that a load balancer is heavily loaded because all service flow packets need to be processed by using the load balancer. In this embodiment, the determined value-added service instance corresponding to the first service flow may be generated by using the load balancer, and after the value-added service instance is determined, a subsequent packet of the first service flow does not need to pass through the load balancer. In this way, generally, the load balancer may only need to allocate a value-added service instance to the first service flow packet in a service flow, thereby relieving processing pressure of the load balancer.

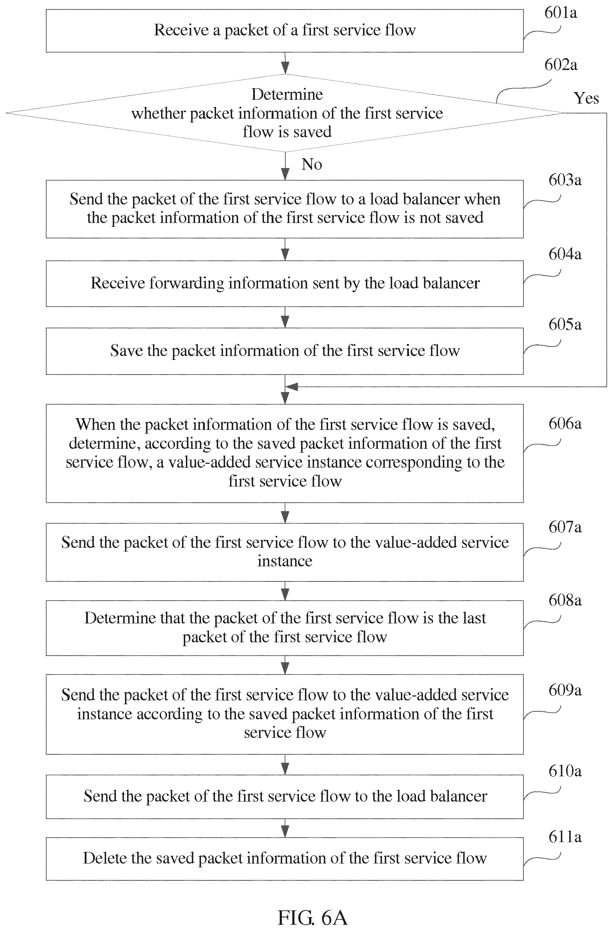

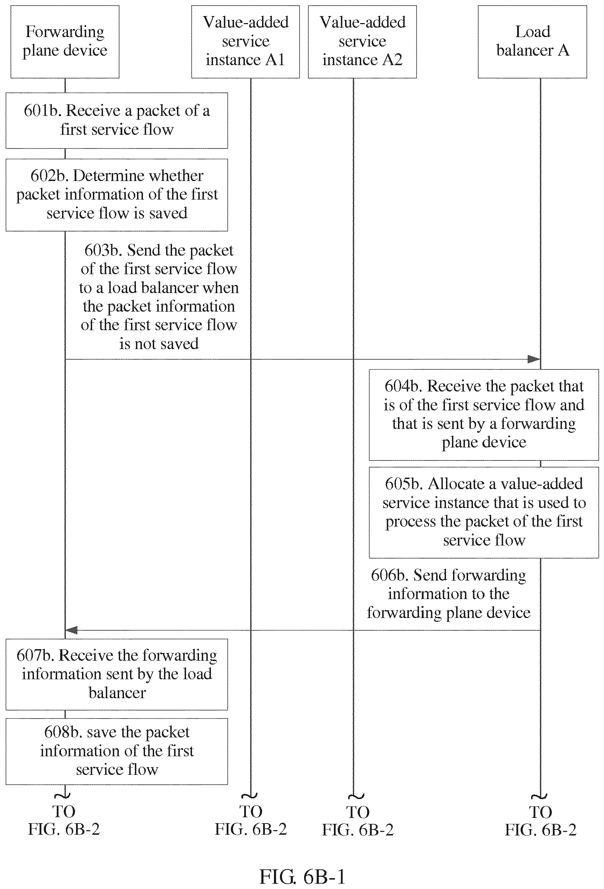

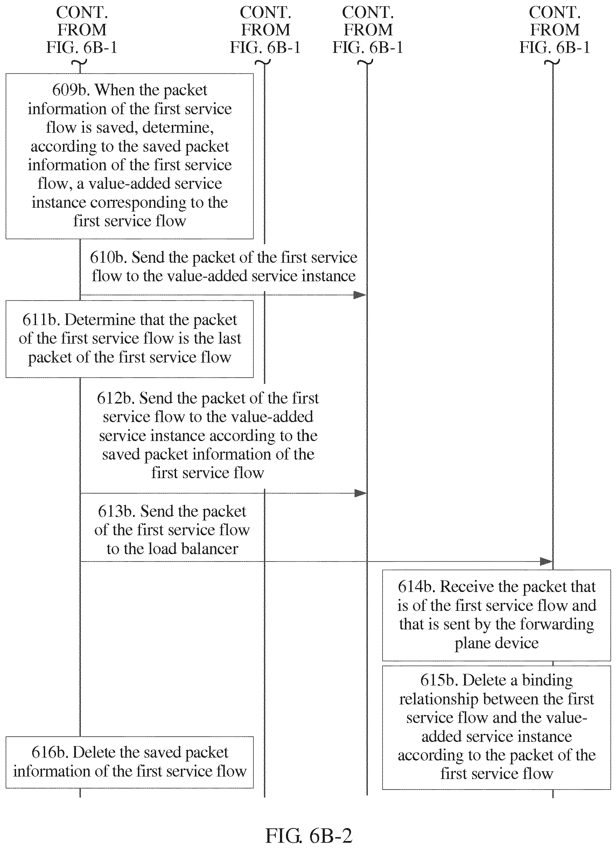

Referring to FIG. 6A, FIG. 6A shows a flowchart of a service processing method according to another embodiment of the present invention. In this embodiment, an example in which the service processing method is applied in the forwarding plane device 110 shown in FIG. 1 is used for description, and the method may include the following steps.

Step 601a: Receive a packet of a first service flow.

A classifier (not shown in FIG. 1) decides a value-added service that needs to be executed by each service flow, then adds corresponding service chain information into a service flow packet, and sends the service flow packet to the forwarding plane device. The service chain information indicates a value-added service sequence that needs to be executed by the service flow.

For example, the classifier decides that value-added services that need to be executed by a service flow are a value-added service A and a value-added service B, that is, service chain information corresponding to the value-added service A and service chain information corresponding to the value-added service B are added into a service flow packet of the service flow. For another example, the classifier decides that value-added services that need to be executed by another service flow are a value-added service A, a value-added service B, and a value-added service C, that is, service chain information corresponding to the value-added service A, service chain information corresponding to the value-added service B, and service chain information corresponding to value-added service C are added into a service flow packet of the service flow.

The forwarding plane device receives the packet that is of the first service flow and that is sent by the classifier. The packet of the first service flow carries service chain information of the first service flow, and the service chain information includes a service chain identifier and a service chain index. The service chain identifier is used to indicate the value-added service sequence that needs to be executed by the service flow, and the service chain index is used to indicate a location of a current value-added service that needs to be executed by the service flow in the value-added service sequence.

For example, the first service flow needs to successively execute the value-added service A and the value-added service B. Before sending the packet of the first service flow to the forwarding plane device, the classifier generates the service chain information of the first service flow and adds the service chain information into the packet of the first service flow. The service chain identifier indicates that the first service flow needs to successively execute the value-added service A and the value-added service B. The service chain index indicates a location of a current value-added service that needs to be executed in the value-added service sequence. If the service chain index=2, it indicates that the current value-added service that needs to be executed is the value-added service A; or if the service chain index=1, it indicates that the current value-added service that needs to be executed is the value-added service B. Each time one value-added service is completed, the service chain index is automatically decreased by 1 by a value-added service instance.

Step 602a: Determine whether packet information of the first service flow is saved, where the packet information of the first service flow is used to determine a value-added service instance that is used to process the packet of the first service flow.

After receiving the packet of the first service flow, the forwarding plane device determines whether the packet information of the first service flow is saved. The packet information may be a forwarding table that includes an identifier of the value-added service instance that is used to process the packet of the first service flow. The forwarding plane device may perform matching according to the forwarding table, so as to determine the value-added service instance that is used to process the packet of the first service flow.

It should be noted that before receiving the packet that is of the first service flow and that is delivered by the classifier, the forwarding plane device may receive routing information that is sent by a control plane device and that is directed to a load balancer, and the routing information that is directed to the load balancer may be saved in a table with a table structure shown in Table 1.

**Table 1**

| **Match item** | **Match priority** | **Action item** |
|---|---|---|
| Service chain identifier=AB, and service chain index=2 | Low | Load balancer A |
| Service chain identifier=AB, and service chain index=1 | Low | Load balancer B |

The service chain identifier=AB indicates that the service flow needs to successively execute the value-added service A and the value-added service B. The service chain index=2 indicates that the current value-added service that needs to be executed is the value-added service A. The service chain index=1 indicates that the current value-added service that needs to be executed is the value-added service B. When the action item is the load balancer A, it indicates that the service flow packet is sent to the load balancer A. When the action item is the load balancer B, it indicates that the service flow packet is sent to the load balancer B. The action item may be address information, for example, an IP address or a MAC address, of a network element; or the action item may be a logical identifier, and the forwarding plane device obtains address information of a corresponding network element from another table according to the logical identifier.

It should be noted that, the foregoing routing information may also be generated, for example, by means of manual configuration on the forwarding plane device or according to a routing protocol. An example in which the routing information is delivered by the control plane device is used in this embodiment for description, but constitutes no limitation to this embodiment of the present invention.

The value-added service instance that is used to process the packet of the first service flow cannot be determined according to the routing information. Therefore, when only the routing information is saved on the forwarding plane device, it is considered that the packet information of the first service flow is not saved on the forwarding plane device.

When the packet information of the first service flow is not saved on the forwarding plane device, step 603a is performed; or when the packet information of the first service flow is saved, step 606a is performed.

Step 603a: Send the packet of the first service flow to a load balancer when the packet information of the first service flow is not saved.

For example, if the service chain identifier of the first service flow is AB, and the service chain index is 2, the forwarding plane device sends the packet of the first service flow to the load balancer A according to the routing information that is directed to the load balancer.

Correspondingly, the load balancer A receives the packet that is of the first service flow and that is sent by the forwarding plane device, and allocates the value-added service instance that is used to process the packet of the first service flow.

The load balancer allocates the value-added service instance to the packet of the first service flow according to a load status of each value-added service instance. It should be noted that after allocating the value-added service instance to the packet of the first service flow, the load balancer records a binding relationship between the first service flow and the value-added service instance.

For example, the load balancer A obtains a load status of a value-added service instance that provides the value-added service A. When value-added service instances that provide the value-added service A include a value-added service instance A1, a value-added service instance A2, and a value-added service instance A3, the load balancer A allocates, according to load statuses of the three value-added service instances, the value-added service instance A2 with lowest load to the packet of the first service flow, and records a binding relationship between the first service flow and the value-added service instance A2.

After allocating the value-added service instance to the packet of the first service flow, the load balancer sends forwarding information to the forwarding plane device, where the forwarding information is used to instruct the forwarding plane device to forward the packet of the first service flow to the value-added service instance.

After allocating the value-added service instance to the packet of the first service flow, the load balancer generates the forwarding information. The forwarding information may be an instance identifier of the value-added service instance that is used to process the packet of the first service flow, or may be a first relationship entry. The first relationship entry includes a match item and an action item. The match item is used to match the packet of the first service flow, and the action item is used to indicate the value-added service instance that is used to process the packet of the first service flow. The match item may be 5-tuple information, service chain information, or the like, of the packet of the first service flow, and the action item may be the instance identifier of the value-added service instance that is used to process the packet of the first service flow.

For example, if the value-added service instance allocated by the load balancer A to the packet of the first service flow is the value-added service instance A2, the generated forwarding information may be an instance identifier "value-added service instance A2" of the value-added service instance, or may be the first relationship entry, where the match item is 5-tuple information and service chain information of the packet of the first service flow, and the action item is the instance identifier "value-added service instance A2" of the value-added service instance that is used to process the packet of the first service flow.

After generating the forwarding information, the load balancer sends a modified packet of the first service flow to the forwarding plane device, where the modified packet of the first service flow includes the foregoing forwarding information.

For example, the load balancer saves the forwarding information into a preset field of the packet of the first service flow. The preset field may be an original field in the packet of the first service flow, or may be a new field added into the packet. The preset field may be a value-added service VAS instance field, or the like.

It should be noted that a data section of the modified packet of the first service flow is consistent with a data section of the packet of the first service flow before the modification.

In an embodiment, the forwarding information may be the packet information of the first service flow.

Step 604a: Receive forwarding information sent by the load balancer, where the forwarding information is used to indicate the value-added service instance that is allocated by the load balancer and that is used to process the packet of the first service flow.

The forwarding plane device receives the modified packet of the first service flow, where the modified packet of the first service flow includes the forwarding information, and the forwarding information is determined by the load balancer.

Step 605a: Save the packet information of the first service flow.

The forwarding plane device generates the packet information of the first service flow according to the forwarding information, and saves the packet information of the first service flow.

When the forwarding information is the instance identifier of the value-added service instance allocated by the load balancer, the forwarding plane device generates an action item of the packet information according to the instance identifier of the value-added service instance, and generates a match item of the packet information according to the 5-tuple information and the service chain information of the first service flow, thereby generating the packet information of the first service flow and storing the packet information.

When the forwarding information is the first relationship entry, the forwarding plane device generates a match item of the packet information according to the match item of the first relationship entry, and generates an action item of the packet information according to the action item of the first relationship entry, thereby generating the packet information of the first service flow and storing the packet information. Alternatively, the forwarding plane device may directly use the first relationship entry as the packet information.

When receiving a subsequent packet that is of the first service flow and that is sent by the classifier, the forwarding plane device may determine that the packet information of the first service flow is saved, and forward the subsequent packet of the first service flow according to the packet information.

The forwarding plane device may save the packet information according to a storage structure in Table 2.

**Table 2**

| **Match item** | **Match priority** | **Action item** |
|---|---|---|
| 5-tuple A, Service chain identifier=AB, and service chain index=2 | High | Value-added service instance 2 |

The match priority is used to indicate a decision priority sequence according to which the forwarding plane device determines a value-added service instance corresponding to a service flow.

Step 606a: When the packet information of the first service flow is saved, determine, according to the saved packet information of the first service flow, a value-added service instance corresponding to the first service flow.

When the packet information of the first service flow is saved on the forwarding plane device, the forwarding plane device matches the first service flow with the match item of the packet information, and determines the corresponding value-added service instance according to an action item that is of the matched packet information.

Step 607a: Send the packet of the first service flow to the value-added service instance.

After determining the value-added service instance corresponding to the first service flow, the forwarding plane device sends the packet of the first service flow to the value-added service instance. This step may include the following sub-steps.
1. The forwarding plane device generates a next-hop identifier according to the value-added service instance corresponding to the first service flow.
   The forwarding plane device generates the next-hop identifier of the packet of the first service flow according to the determined value-added service instance. The next-hop identifier is used to indicate an address to which the packet of the first service flow is subsequently sent.
   For example, if the value-added service instance that is corresponding to the packet of the first service flow and that is determined by the forwarding plane device is the value-added service instance 2, the forwarding plane device generates a next-hop identifier "value-added service instance 2" according to an address of the value-added service instance 2.
2. The forwarding plane device sends the packet of the first service flow to the value-added service instance according to the next-hop identifier.

Correspondingly, the forwarding plane device sends the packet of the first service flow to the value-added service instance 2, and the value-added service instance 2 processes the received packet of the first service flow and provides a value-added service for the packet.

It should be noted that when the first service flow includes multiple packets, step 601a to step 607a are performed for multiple times.

Apparently, when a subsequent packet of the first service flow is sent to the forwarding plane device, because the packet information of the first service flow is already saved on the forwarding plane device, the forwarding plane device may directly send the subsequent packet of the first service flow to a corresponding value-added service instance, instead of sending the subsequent packet to the load balancer and allocating a value-added service instance to the subsequent packet by using the load balancer, thereby relieving processing pressure of the load balancer.

After processing of one service flow is completed, the forwarding plane device should delete packet information corresponding to the service flow, so as to avoid impact on processing of another subsequent service flow. In this embodiment, the method further includes the following steps.

Step 608a: Determine that the packet of the first service flow is the last packet of the first service flow.

When receiving the packet of the first service flow, the forwarding plane device detects whether the packet carries an end identifier. The end identifier may be a special field in a service flow packet, or the like. When detecting that the packet carries the end identifier, the forwarding plane device determines that the packet is the last packet of the first service flow.

Step 609a: Send the packet of the first service flow to the value-added service instance according to the saved packet information of the first service flow.

When determining that the packet of the first service flow is the last packet of the first service flow, the forwarding plane device sends the service flow packet to a corresponding value-added service instance according to the saved packet information of the first service flow. Correspondingly, the value-added service instance processes the received packet of the first service flow and provides a value-added service for the packet.

Step 610a: Send the packet of the first service flow to the load balancer, where the packet of the first service flow is used to instruct the load balancer to delete a binding relationship between the first service flow and the value-added service instance.

When the forwarding plane device determines that the received packet of the first service flow is the last packet of the first service flow, the forwarding plane device sends the packet of the first service flow to the load balancer. The packet of the first service flow carries the end identifier, and is used to instruct the load balancer to delete the binding relationship between the first service flow and the value-added service instance.

It should be noted that there is no strict sequence between step 609a and step 610a, and step 609a and step 610a may be concurrently performed. An example in which step 609a is performed before step 610a is used in this embodiment as merely an example for description, and constitutes no limitation to this embodiment.

Correspondingly, the load balancer receives the packet that is of the first service flow and that is sent by the forwarding plane device. The forwarding plane device determines that the packet of the first service flow is the last packet of the first service flow.

The load balancer deletes the binding relationship between the first service flow and the value-added service instance according to the received packet of the first service flow.

When detecting that the packet of the first service flow carries the end identifier, the load balancer deletes the binding relationship between the first service flow and the value-added service instance according to the packet of the first service flow.

Step 611a: Delete the saved packet information of the first service flow.

After sending the last packet of the first service flow to the value-added service instance according to the saved packet information of the first service flow, the forwarding plane device deletes the saved packet information of the first service flow according to the received packet that is of the first service flow and that carries the end identifier.

In conclusion, in this embodiment, a forwarding plane device sends a packet of a first service flow; the forwarding plane device determines a value-added service instance corresponding to the first service flow; and the forwarding plane device sends the packet of the first service flow to the value-added service instance. In this way, a problem is resolved that a load balancer is heavily loaded because all service flow packets need to be processed by using the load balancer; and generally, the load balancer may only need to allocate a value-added service instance to the first service flow packet in a service flow, thereby relieving processing pressure of the load balancer.

In addition, in this embodiment, when the packet of the first service flow is the last packet in the first service flow, the forwarding plane device deletes packet information and instructs the load balancer to delete a binding relationship between the first service flow and the value-added service instance. In this way, a problem is resolved that when previous and current service flows have same 5-tuple information, the load balancer may directly allocate a value-added service instance to a service flow according to a recorded binding relationship, instead of performing value-added service instance selection.

Referring to FIG. 6B-1 and FIG. 6B-2, FIG. 6B-1 and FIG. 6B-2 show a flowchart of a service processing method according to still another embodiment of the present invention. In this embodiment, an example in which the service processing method is applied in the implementation environment shown in FIG. 1 is used for description, and the method may include the following steps.

Step 601b: A forwarding plane device receives a packet of a first service flow.

A classifier (not shown in FIG. 1) decides a value-added service that needs to be executed by each service flow, then adds corresponding service chain information into a service flow packet, and sends the service flow packet to the forwarding plane device. The service chain information indicates a value-added service sequence that needs to be executed by the service flow.

For example, the classifier decides that value-added services that need to be executed by a service flow are a value-added service A and a value-added service B, that is, service chain information corresponding to the value-added service A and service chain information corresponding to the value-added service B are added into a service flow packet of the service flow. For another example, the classifier decides that value-added services that need to be executed by another service flow are a value-added service A, a value-added service B, and a value-added service C, that is, service chain information corresponding to the value-added service A, service chain information corresponding to the value-added service B, and service chain information corresponding to value-added service C are added into a service flow packet of the service flow.

The forwarding plane device receives the packet that is of the first service flow and that is sent by the classifier. The packet of the first service flow carries service chain information of the first service flow, and the service chain information includes a service chain identifier and a service chain index. The service chain identifier is used to indicate the value-added service sequence that needs to be executed by the service flow, and the service chain index is used to indicate a location of a current value-added service that needs to be executed by the service flow in the value-added service sequence.

For example, the first service flow needs to successively execute the value-added service A and the value-added service B. Before sending the packet of the first service flow to the forwarding plane device, the classifier generates the service chain information of the first service flow and adds the service chain information into the packet of the first service flow. The service chain identifier indicates that the first service flow needs to successively execute the value-added service A and the value-added service B. The service chain index indicates a location of a current value-added service that needs to be executed in the value-added service sequence. If the service chain index=2, it indicates that the current value-added service that needs to be executed is the value-added service A; or if the service chain index=1, it indicates that the current value-added service that needs to be executed is the value-added service B. Each time one value-added service is completed, the service chain index is automatically decreased by 1 by a value-added service instance.

Step 602b: The forwarding plane device determines whether packet information of the first service flow is saved, where the packet information of the first service flow is used to determine a value-added service instance that is used to process the packet of the first service flow.

After receiving the packet of the first service flow, the forwarding plane device determines whether the packet information of the first service flow is saved. The packet information may be a forwarding table that includes an identifier of the value-added service instance that is used to process the packet of the first service flow. The forwarding plane device may perform matching according to the forwarding table, so as to determine the value-added service instance that is used to process the packet of the first service flow.

It should be noted that before receiving the packet that is of the first service flow and that is delivered by the classifier, the forwarding plane device may receive routing information that is sent by a control plane device and that is directed to a load balancer, and the routing information that is directed to the load balancer may be saved in a table with a table structure shown in Table 1.

**Table 1**

| **Match item** | **Match priority** | **Action item** |
|---|---|---|
| Service chain identifier=AB, and service chain index=2 | Low | Load balancer A |
| Service chain identifier=AB, | Low | Load balancer B |
| and service chain index= 1 | | |

The service chain identifier=AB indicates that the service flow needs to successively execute the value-added service A and the value-added service B. The service chain index=2 indicates that the current value-added service that needs to be executed is the value-added service A. The service chain index=1 indicates that the current value-added service that needs to be executed is the value-added service B. When the action item is the load balancer A, it indicates that the service flow packet is sent to the load balancer A. When the action item is the load balancer B, it indicates that the service flow packet is sent to the load balancer B. The action item may be address information, for example, an IP address or a MAC address, of a network element; or the action item may be a logical identifier, and the forwarding plane device obtains address information of a corresponding network element from another table according to the logical identifier.

It should be noted that, the foregoing routing information may also be generated, for example, by means of manual configuration on the forwarding plane device or according to a routing protocol. An example in which the routing information is delivered by the control plane device is used in this embodiment for description, but constitutes no limitation to this embodiment of the present invention.

The value-added service instance that is used to process the packet of the first service flow cannot be determined according to the routing information. Therefore, when only the routing information is saved on the forwarding plane device, it is considered that the packet information of the first service flow is not saved on the forwarding plane device.

When the packet information of the first service flow is not saved on the forwarding plane device, step 603b is performed; or when the packet information of the first service flow is saved, step 609b is performed.

Step 603b: The forwarding plane device sends the packet of the first service flow to a load balancer when the packet information of the first service flow is not saved.

When the packet information of the first service flow is not saved, the forwarding plane device sends the packet of the first service flow to a corresponding load balancer according to the routing information.

For example, if the service chain identifier of the first service flow is AB, and the service chain index is 2, the forwarding plane device sends the packet of the first service flow to the load balancer A according to the routing information that is directed to the load balancer.

Step 604b: The load balancer receives the packet that is of the first service flow and that is sent by the forwarding plane device.

Correspondingly, the load balancer A receives the packet that is of the first service flow and that is sent by the forwarding plane device.

Step 605b: The load balancer allocates the value-added service instance that is used to process the packet of the first service flow.

The load balancer allocates the value-added service instance to the packet of the first service flow according to a load status of each value-added service instance.

It should be noted that after allocating the value-added service instance to the packet of the first service flow, the load balancer records a binding relationship between the first service flow and the value-added service instance.

For example, the load balancer A obtains a load status of a value-added service instance that provides the value-added service A. When value-added service instances that provide the value-added service A include a value-added service instance A1, a value-added service instance A2, and a value-added service instance A3, the load balancer A allocates, according to load statuses of the three value-added service instances, the value-added service instance A2 with lowest load to the packet of the first service flow, and records a binding relationship between the first service flow and the value-added service instance A2.

Step 606b: The load balancer sends forwarding information to the forwarding plane device, the forwarding information is used to instruct the forwarding plane device to send the packet of the first service flow to the value-added service instance.

After allocating the value-added service instance to the packet of the first service flow, the load balancer generates the forwarding information. The forwarding information may be an instance identifier of the value-added service instance that is used to process the packet of the first service flow, or may be a first relationship entry. The first relationship entry includes a match item and an action item. The match item is used to match the packet of the first service flow, and the action item is used to indicate the value-added service instance that is used to process the packet of the first service flow. The match item may be 5-tuple information, service chain information, or the like, of the packet of the first service flow, and the action item may be the instance identifier of the value-added service instance that is used to process the packet of the first service flow.

For example, if the value-added service instance allocated by the load balancer A to the packet of the first service flow is the value-added service instance A2, the generated forwarding information may be an instance identifier "value-added service instance A2" of the value-added service instance, or may be the first relationship entry, where the match item is 5-tuple information and service chain information of the packet of the first service flow, and the action item is the instance identifier "value-added service instance A2" of the value-added service instance that is used to process the packet of the first service flow.

After generating the forwarding information, the load balancer sends a modified packet of the first service flow to the forwarding plane device, where the modified packet of the first service flow includes the foregoing forwarding information.

For example, the load balancer saves the forwarding information into a preset field of the packet of the first service flow. The preset field may be an original field in the packet of the first service flow, or may be a new field added into the packet. The preset field may be a value-added service VAS instance field, or the like.

It should be noted that a data section of the modified packet of the first service flow is consistent with a data section of the packet of the first service flow before the modification.

In an embodiment, the forwarding information may be the packet information of the first service flow.

Step 607b: The forwarding plane device receives the forwarding information sent by the load balancer, where the forwarding information is used to indicate the value-added service instance that is allocated by the load balancer and that is used to process the packet of the first service flow.

The forwarding plane device receives the modified packet of the first service flow, where the modified packet of the first service flow includes the forwarding information, and the forwarding information is determined by the load balancer.

Step 608b: The forwarding plane device saves the packet information of the first service flow.

The forwarding plane device generates the packet information of the first service flow according to the forwarding information, and saves the packet information of the first service flow.

When the forwarding information is the instance identifier of the value-added service instance allocated by the load balancer, the forwarding plane device generates an action item of the packet information according to the instance identifier of the value-added service instance, and generates a match item of the packet information according to the 5-tuple information and the service chain information of the first service flow, thereby generating the packet information of the first service flow and storing the packet information.

When the forwarding information is the first relationship entry, the forwarding plane device generates a match item of the packet information according to the match item of the first relationship entry, and generates an action item of the packet information according to the action item of the first relationship entry, thereby generating the packet information of the first service flow and storing the packet information. Alternatively, the forwarding plane device may directly use the first relationship entry as the packet information.

When receiving a subsequent packet that is of the first service flow and that is sent by the classifier, the forwarding plane device may determine that the packet information of the first service flow is saved, and forward the subsequent packet of the first service flow according to the packet information.

The forwarding plane device may save the packet information according to a storage structure in Table 2.

**Table 2**

| **Match item** | **Match priority** | **Action item** |
|---|---|---|
| 5-tuple A, Service chain identifier=AB, and service chain index=2 | High | Value-added service instance 2 |

The match priority is used to indicate a decision priority sequence according to which the forwarding plane device determines a value-added service instance corresponding to a service flow.

Step 609b: When the packet information of the first service flow is saved, the forwarding plane device determines, according to the saved packet information of the first service flow, a value-added service instance corresponding to the first service flow.

When the packet information of the first service flow is saved on the forwarding plane device, the forwarding plane device matches the first service flow with the match item of the packet information, and determines the corresponding value-added service instance according to an action item that is of the matched packet information.

Step 610b: The forwarding plane device sends the packet of the first service flow to the value-added service instance.

After determining the value-added service instance corresponding to the first service flow, the forwarding plane device sends the packet of the first service flow to the value-added service instance. This step may include the following sub-steps.
1. The forwarding plane device generates a next-hop identifier according to the value-added service instance corresponding to the first service flow.
   The forwarding plane device generates the next-hop identifier of the packet of the first service flow according to the determined value-added service instance. The next-hop identifier is used to indicate an address to which the packet of the first service flow is subsequently sent.
   For example, if the value-added service instance that is corresponding to the packet of the first service flow and that is determined by the forwarding plane device is the value-added service instance 2, the forwarding plane device generates a next-hop identifier "value-added service instance 2" according to an address of the value-added service instance 2.
2. The forwarding plane device sends the packet of the first service flow to the value-added service instance according to the next-hop identifier.

Correspondingly, the forwarding plane device sends the packet of the first service flow to the value-added service instance 2, and the value-added service instance 2 processes the received packet of the first service flow and provides a value-added service for the packet.

It should be noted that when the first service flow includes multiple packets, step 601b to step 610b are performed for multiple times.

Apparently, when a subsequent packet of the first service flow is sent to the forwarding plane device, because the packet information of the first service flow is already saved on the forwarding plane device, the forwarding plane device may directly send the subsequent packet of the first service flow to a corresponding value-added service instance, instead of sending the subsequent packet to the load balancer and allocating a value-added service instance to the subsequent packet by using the load balancer, thereby relieving processing pressure of the load balancer.

After processing of one service flow is completed, the forwarding plane device should delete packet information corresponding to the service flow, so as to avoid impact on processing of another subsequent service flow. In this embodiment, the method further includes the following steps.

Step 611b: The forwarding plane device determines that the packet of the first service flow is the last packet of the first service flow.

When receiving the packet of the first service flow, the forwarding plane device detects whether the packet carries an end identifier. The end identifier may be a special field in a service flow packet, or the like. When detecting that the packet carries the end identifier, the forwarding plane device determines that the packet is the last packet of the first service flow.

Step 612b: The forwarding plane device sends the packet of the first service flow to the value-added service instance according to the saved packet information of the first service flow.

When determining that the packet of the first service flow is the last packet of the first service flow, the forwarding plane device sends the service flow packet to a corresponding value-added service instance according to the saved packet information of the first service flow. Correspondingly, the value-added service instance processes the received packet of the first service flow and provides a value-added service for the packet.

Step 613b: The forwarding plane device sends the packet of the first service flow to the load balancer, where the packet of the first service flow is used to instruct the load balancer to delete a binding relationship between the first service flow and the value-added service instance.

When the forwarding plane device determines that the received packet of the first service flow is the last packet of the first service flow, the forwarding plane device sends the packet of the first service flow to the load balancer. The packet of the first service flow carries the end identifier, and is used to instruct the load balancer to delete the binding relationship between the first service flow and the value-added service instance.

It should be noted that there is no strict sequence between step 612b and step 613b, and step 612b and step 613b may be concurrently performed. An example in which step 612b is performed before step 613b is used in this embodiment as merely an example for description, and constitutes no limitation to this embodiment.

Step 614b: The load balancer receives the packet that is of the first service flow and that is sent by the forwarding plane device. The forwarding plane device determines that the packet of the first service flow is the last packet of the first service flow.

Step 615b: The load balancer deletes the binding relationship between the first service flow and the value-added service instance according to the packet of the first service flow.

When detecting that the packet of the first service flow carries the end identifier, the load balancer deletes the binding relationship between the first service flow and the value-added service instance according to the packet of the first service flow.

Step 616b: The forwarding plane device deletes the saved packet information of the first service flow.

After sending the last packet of the first service flow to the value-added service instance according to the saved packet information of the first service flow, the forwarding plane device deletes the saved packet information of the first service flow according to the received packet that is of the first service flow and that carries the end identifier.

In conclusion, in this embodiment, a forwarding plane device sends a packet of a first service flow; the forwarding plane device determines a value-added service instance corresponding to the first service flow; and the forwarding plane device sends the packet of the first service flow to the value-added service instance. In this way, a problem is resolved that a load balancer is heavily loaded because all service flow packets need to be processed by using the load balancer; and generally, the load balancer may only need to allocate a value-added service instance to the first service flow packet in a service flow, thereby relieving processing pressure of the load balancer.

In addition, in this embodiment, when the packet of the first service flow is the last packet in the first service flow, the forwarding plane device deletes packet information and instructs the load balancer to delete a binding relationship between the first service flow and the value-added service instance. In this way, a problem is resolved that when previous and current service flows have same 5-tuple information, the load balancer may directly allocate a value-added service instance to a service flow according to a recorded binding relationship, instead of performing value-added service instance selection.

Step 601, step 602b, step 603b, step 607b, step 608b, step 609b, step 610b, step 611b, step 612b, and step 613b in the foregoing embodiment may be independently implemented to be a service processing method on a forwarding plane device side. It should be noted that FIG. 6B-1 and FIG. 6B-2 are merely a schematic diagram of this method, and may be a determining process in a determining step. For example, if a determining result corresponding to a process of step 602b is corresponding to step 609b in which the packet information of the first service flow is saved, the forwarding plane device may directly jump to step 609b. In addition, similar aspects and other logic alteration, combination, or deletion made to steps and modules in various embodiments are not limited in the present invention.

A same service flow may be related to two or more forwarding plane devices. As shown in FIG. 7, in this case, a same service flow is related to both a forwarding plane device 710 and a forwarding plane device 720. The forwarding plane device 720 is directly connected to a value-added service instance. A control plane device may generate packet information of the service flow and send the packet information to the forwarding plane device related to the service flow. An embodiment is given below for description.

Referring to FIG. 8A, FIG. 8A shows a flowchart of a service processing method according to yet another embodiment of the present invention. The method includes the following steps.

Step 801a: Receive a packet of a first service flow.

A forwarding plane device 710 receives the packet that is of the first service flow and that is sent by a classifier. A specific implementation manner of this step is similar to that of step 601a, and details are not described herein.

Step 802a: Determine whether packet information of the first service flow is saved, where the packet information of the first service flow is used to determine a value-added service instance that is used to process the packet of the first service flow.

The forwarding plane device 710 determines whether the packet information of the first service flow is saved. When the packet information of the first service flow is saved, step 806a is performed; or when the packet information of the first service flow is not saved, step 803a is performed. A specific implementation manner of this step is similar to that of step 602a, and details are not described herein.

Step 803a: Send the packet of the first service flow to a load balancer when the packet information of the first service flow is not saved.

When the packet information of the first service flow is not saved, a forwarding plane device 720 sends the packet of the first service flow to a load balancer A according to a routing and forwarding table that is directed to the load balancer. A specific implementation manner of this step is similar to that of step 603a, and details are not described herein.

Correspondingly, the load balancer receives the packet that is of the first service flow and that is sent by the forwarding plane device, and allocates the value-added service instance that is used to process the packet of the first service flow.

The load balancer A allocates the value-added service instance to the packet of the first service flow according to a load status of each value-added service instance. In this embodiment, an example in which the load balancer A allocates a value-added service instance A2 to the packet of the first service flow is used for description.

After allocating the value-added service instance to the packet of the first service flow, the load balancer sends forwarding information to the control plane device.

After allocating the value-added service instance A2 to the packet of the first service flow, the load balancer A generates the forwarding information. The forwarding information may be an instance identifier of the value-added service instance that is used to process the packet of the first service flow, or may be a first relationship entry. The first relationship entry includes a match item and an action item. The match item is used to match the packet of the first service flow, and the action item is used to indicate the value-added service instance that is used to process the packet of the first service flow. The match item may be 5-tuple information, service chain information, or the like, of the packet of the first service flow, and the action item may be the instance identifier of the value-added service instance that is used to process the packet of the first service flow.

For example, if the value-added service instance allocated by the load balancer A to the packet of the first service flow is the value-added service instance A2, the generated forwarding information may be an instance identifier "value-added service instance A2" of the value-added service instance, or may be the first relationship entry, where the match item is 5-tuple information and service chain information of the packet of the first service flow, and the action item is the instance identifier "value-added service instance A2" of the value-added service instance that is used to process the packet of the first service flow.

After generating the forwarding information, the load balancer A sends a modified packet of the first service flow to the control plane device, where the modified packet of the first service flow includes the foregoing forwarding information.

For example, the load balancer A saves the forwarding information into a preset field of the packet of the first service flow. The preset field may be a field in the packet of the first service flow, or may be a field added into the packet. The preset field may be a value-added service VAS instance field, or the like.

It should be noted that a data section of the modified packet of the first service flow is consistent with a data section of the packet of the first service flow before the modification.

Correspondingly, the control plane device receives the forwarding information sent by the load balancer.

The control plane device generates the packet information of the first service flow according to the forwarding information.

When the forwarding information is the instance identifier of the value-added service instance allocated by the load balancer, the control plane device generates an action item of the packet information according to the instance identifier of the value-added service instance, and generates a match item of the packet information according to the 5-tuple information and the service chain information of the first service flow, thereby generating the packet information of the first service flow.

When the forwarding information is the first relationship entry, the control plane device generates a match item of the packet information according to the match item of the first relationship entry, and generates an action item of the packet information according to the action item of the first relationship entry, thereby generating the packet information of the first service flow. Alternatively, the control plane device may directly use the first relationship entry as the packet information.

The generated packet information may be saved according to the storage structure in Table 2.

After generating the packet information of the first service flow, the control plane device sends the packet information to all forwarding plane devices related to the packet of the first service flow.

For example, as shown in FIG. 7, the control plane device is related to the forwarding plane device 710 and the forwarding plane device 720. After generating the packet information of the first service flow, the control plane device sends the packet information to the forwarding plane device 710 and the forwarding plane device 720.

Step 804a: Receive the packet information that is of the first service flow and that is sent by a control plane device.

Correspondingly, the forwarding plane device 710 and the forwarding plane device 720 receive the packet information that is of the first service flow and that is sent by the control plane device.

Step 805a: Save the packet information of the first service flow.

After receiving the packet information, the forwarding plane device saves the packet information of the first service flow. In this case, the packet information of the first service flow is saved on both the forwarding plane device 710 and the forwarding plane device 720.

Step 806a: When the packet information of the first service flow is saved, determine, according to the saved packet information of the first service flow, a value-added service instance corresponding to the first service flow.

When the packet information of the first service flow is saved on the forwarding plane device, the forwarding plane device matches the first service flow with the match item of the packet information, and determines the corresponding value-added service instance according to an action item that is of the matched packet information.

Step 807a: Send the packet of the first service flow to the value-added service instance.

As shown in FIG. 7, the forwarding plane device 710 is directly connected to the forwarding plane device 720, and the forwarding plane device 720 is directly connected to the value-added service instance. Therefore, the forwarding plane device 710 sends the packet of the first service flow to the forwarding plane device 720.

The packet information that is of the first service flow and that is sent by the control plane device is also saved on the forwarding plane device 720. Therefore, the forwarding plane device sends the packet of the first service flow to the value-added service instance A2. A specific implementation manner of this step is similar to that of step 610a, and details are not described herein.

Apparently, when a subsequent packet of the first service flow is sent to the forwarding plane device 710, because the packet information of the first service flow is already saved on the forwarding plane device 710, the forwarding plane device 710 may directly send the subsequent packet of the first service flow to the forwarding plane device 720, and the forwarding plane device 720 sends the packet of the first service flow to a corresponding value-added service instance, instead of sending the subsequent packet to the load balancer and allocating a value-added service instance to the subsequent packet by using the load balancer, thereby relieving processing pressure of the load balancer.

After processing of one service flow is completed, the forwarding plane device should delete packet information corresponding to the service flow, so as to avoid impact on processing of another subsequent service flow. In this embodiment, the method further includes the following steps.

Step 808a: Determine that the packet of the first service flow is the last packet of the first service flow and that a forwarding plane device is directly connected to the value-added service instance.

When receiving the packet of the first service flow, the forwarding plane device detects whether the packet carries an end identifier. The end identifier may be a special field in a service flow packet, or the like. When detecting that the packet carries the end identifier, the forwarding plane device determines that the packet is the last packet of the first service flow. When the forwarding plane device is directly connected to the value-added service instance, the forwarding plane device determines that the forwarding plane device and the value-added service instance are directly connected.

It should be noted that, a direct connection between the forwarding plane device and the value-added service instance means that no other forwarding plane device that processes service chain information exists between the forwarding plane device and value-added service instance, but a switching device that processes link layer forwarding or a routing device that processes network layer forwarding may be an exception.

As shown in FIG. 7, the forwarding plane device 720 is directly connected to the value-added service instance.

Step 809a: Send the packet of the first service flow to the value-added service instance according to the saved packet information of the first service flow.

When determining that the packet of the first service flow is the last packet of the first service flow, the forwarding plane device sends the service flow packet to a corresponding value-added service instance according to the saved packet information of the first service flow. Correspondingly, the value-added service instance processes the received packet of the first service flow and provides a value-added service for the packet.

Step 810a: Send the packet of the first service flow to the load balancer, where the packet of the first service flow is used to instruct the load balancer to delete a binding relationship between the first service flow and the value-added service instance.

When the forwarding plane device determines that the received packet of the first service flow is the last packet of the first service flow, the forwarding plane device sends the packet of the first service flow to the load balancer. The packet of the first service flow carries the end identifier, and is used to instruct the load balancer to delete the binding relationship between the first service flow and the value-added service instance.

It should be noted that there is no strict sequence between step 809a and step 810a, and step 809a and step 810a may be concurrently performed. An example in which step 809a is performed before step 810a is used in this embodiment as merely an example for description, and constitutes no limitation to this embodiment.

Correspondingly, the load balancer receives the packet that is of the first service flow and that is sent by the forwarding plane device. The forwarding plane device determines that the packet of the first service flow is the last packet of the first service flow.

When detecting that the packet of the first service flow carries the end identifier, the load balancer deletes the binding relationship between the first service flow and the value-added service instance according to the packet of the first service flow.

Step 811a: Send the packet of the first service flow to the control plane device, where the packet of the first service flow is used to instruct the control plane device to deliver a deletion rule instruction to a forwarding plane device related to the first service flow.

The forwarding plane device sends the packet that is of the first service flow and that carries the end identifier to the control plane device. The packet is used to instruct the control plane device to send an instruction of deleting the saved packet information of the first service flow to all forwarding plane devices on which the packet information of the first service flow is saved.

For example, as shown in FIG. 7, the forwarding plane device 720 sends the packet of the first service flow to the control plane device.

Correspondingly, the control plane device receives the packet of the first service flow, where the packet of the first service flow is used to instruct the control plane device to deliver the deletion rule instruction to the forwarding plane device related to the first service flow.

The control plane device delivers, according to the received packet of the first service flow, the deletion rule instruction to the forwarding plane device related to the first service flow.

For example, as shown in FIG. 7, the packet information of the first service flow is saved on the forwarding plane device 710 and the forwarding plane device 720, that is, the forwarding plane device 710 and the forwarding plane device 720 are forwarding plane devices related to the first service flow. The control plane device sends the deletion rule instruction to the forwarding plane device 710 and the forwarding plane device 720.

Step 812a: Receive the deletion rule instruction sent by the control plane device.

The forwarding plane device 710 and the forwarding plane device 720 receive the deletion rule instruction sent by a control device.

Step 813a: Delete the saved packet information of the first service flow.

After sending the last packet of the first service flow to the value-added service instance according to the saved packet information of the first service flow, the forwarding plane device deletes the saved packet information of the first service flow according to the received packet that is of the first service flow and that carries the end identifier.

For example, as shown in FIG. 7, the forwarding plane device 710 and the forwarding plane device 720 receive the deletion rule instruction sent by the control plane device, and delete the saved packet information of the first service flow according to the deletion rule instruction.

In this embodiment, a forwarding plane device sends the last packet of a first service flow to a control plane device, and the control plane device sends a deletion rule instruction to a forwarding plane device related to the first service flow, thereby deleting all packet information of the first service flow.

Referring to FIG. 8B-1, FIG. 8B-2, and FIG. 8B-3, FIG. 8B-1, FIG. 8B-2, and FIG. 8B-3 show a flowchart of a service processing method according to still yet another embodiment of the present invention. The method includes the following steps.

Step 801b: A forwarding plane device receives a packet of a first service flow.

A forwarding plane device 710 receives the packet that is of the first service flow and that is sent by a classifier. A specific implementation manner of this step is similar to that of step 601b, and details are not described herein.

Step 802b: The forwarding plane device determines whether packet information of the first service flow is saved, where the packet information of the first service flow is used to determine a value-added service instance that is used to process the packet of the first service flow.

The forwarding plane device 710 determines whether the packet information of the first service flow is saved. When the packet information of the first service flow is saved, step 812b is performed; or when the packet information of the first service flow is not saved, step 803b is performed. A specific implementation manner of this step is similar to that of step 602b, and details are not described herein.

Step 803b: The forwarding plane device sends the packet of the first service flow to a load balancer when the packet information of the first service flow is not saved.

When the packet information of the first service flow is not saved, a forwarding plane device 720 sends the packet of the first service flow to a load balancer A according to a routing and forwarding table that is directed to the load balancer. A specific implementation manner of this step is similar to that of step 603b, and details are not described herein.

Step 804b: The load balancer receives the packet that is of the first service flow and that is sent by the forwarding plane device.

Correspondingly, the load balancer A receives the packet that is of the first service flow and that is sent by the forwarding plane device 720.

Step 805b: The load balancer allocates the value-added service instance that is used to process the packet of the first service flow.

The load balancer A allocates the value-added service instance to the packet of the first service flow according to a load status of each value-added service instance. In this embodiment, an example in which the load balancer A allocates a value-added service instance A2 to the packet of the first service flow is used for description.

Step 806b: The load balancer sends forwarding information to a control plane device.

After allocating the value-added service instance A2 to the packet of the first service flow, the load balancer A generates the forwarding information. The forwarding information may be an instance identifier of the value-added service instance that is used to process the packet of the first service flow, or may be a first relationship entry. The first relationship entry includes a match item and an action item. The match item is used to match the packet of the first service flow, and the action item is used to indicate the value-added service instance that is used to process the packet of the first service flow. The match item may be 5-tuple information, service chain information, or the like, of the packet of the first service flow, and the action item may be the instance identifier of the value-added service instance that is used to process the packet of the first service flow.

For example, if the value-added service instance allocated by the load balancer A to the packet of the first service flow is the value-added service instance A2, the generated forwarding information may be an instance identifier "value-added service instance A2" of the value-added service instance, or may be the first relationship entry, where the match item is 5-tuple information and service chain information of the packet of the first service flow, and the action item is the instance identifier "value-added service instance A2" of the value-added service instance that is used to process the packet of the first service flow.

After generating the forwarding information, the load balancer A sends a modified packet of the first service flow to the control plane device, where the modified packet of the first service flow includes the foregoing forwarding information.

For example, the load balancer A saves the forwarding information into a preset field of the packet of the first service flow. The preset field may be a field in the packet of the first service flow, or may be a field added into the packet. The preset field may be a value-added service VAS instance field, or the like.

It should be noted that a data section of the modified packet of the first service flow is consistent with a data section of the packet of the first service flow before the modification.

Step 807b: The control plane device receives the forwarding information sent by the load balancer.

Correspondingly, the control plane device receives the forwarding information sent by the load balancer A.

Step 808b: The control plane device generates the packet information of the first service flow according to the forwarding information.

When the forwarding information is the instance identifier of the value-added service instance allocated by the load balancer, the control plane device generates an action item of the packet information according to the instance identifier of the value-added service instance, and generates a match item of the packet information according to the 5-tuple information and the service chain information of the first service flow, thereby generating the packet information of the first service flow.

When the forwarding information is the first relationship entry, the control plane device generates a match item of the packet information according to the match item of the first relationship entry, and generates an action item of the packet information according to the action item of the first relationship entry, thereby generating the packet information of the first service flow. Alternatively, the control plane device may directly use the first relationship entry as the packet information.

The generated packet information may be saved according to the storage structure in Table 2.

Step 809b: The control plane device sends the packet information of the first service flow to a related forwarding plane device.

After generating the packet information of the first service flow, the control plane device sends the packet information to all forwarding plane devices related to the packet of the first service flow.

For example, as shown in FIG. 7, the control plane device is related to the forwarding plane device 710 and the forwarding plane device 720. After generating the packet information of the first service flow, the control plane device sends the packet information to the forwarding plane device 710 and the forwarding plane device 720.

Step 810b: The forwarding plane device receives the packet information that is of the first service flow and that is sent by the control plane device.

Correspondingly, the forwarding plane device 710 and the forwarding plane device 720 receive the packet information that is of the first service flow and that is sent by the control plane device.

Step 811b: The forwarding plane device saves the packet information of the first service flow.

After receiving the packet information, the forwarding plane device saves the packet information of the first service flow. In this case, the packet information of the first service flow is saved on both the forwarding plane device 710 and the forwarding plane device 720.

Step 812b: When the packet information of the first service flow is saved, determine, according to the saved packet information of the first service flow, a value-added service instance corresponding to the first service flow.

When the packet information of the first service flow is saved on the forwarding plane device, the forwarding plane device matches the first service flow with the match item of the packet information, and determines the corresponding value-added service instance according to an action item that is of the matched packet information.

Step 813b: The forwarding plane device sends the packet of the first service flow to the value-added service instance.

As shown in FIG. 7, the forwarding plane device 710 is directly connected to the forwarding plane device 720, and the forwarding plane device 720 is directly connected to the value-added service instance. Therefore, the forwarding plane device 710 sends the packet of the first service flow to the forwarding plane device 720.

The packet information that is of the first service flow and that is sent by the control plane device is also saved on the forwarding plane device 720. Therefore, the forwarding plane device sends the packet of the first service flow to the value-added service instance A2. A specific implementation manner of this step is similar to that of step 610b, and details are not described herein.

Apparently, when a subsequent packet of the first service flow is sent to the forwarding plane device 710, because the packet information of the first service flow is already saved on the forwarding plane device 710, the forwarding plane device 710 may directly send the subsequent packet of the first service flow to the forwarding plane device 720, and the forwarding plane device 720 sends the packet of the first service flow to a corresponding value-added service instance, instead of sending the subsequent packet to the load balancer and allocating a value-added service instance to the subsequent packet by using the load balancer, thereby relieving processing pressure of the load balancer.

After processing of one service flow is completed, the forwarding plane device should delete packet information corresponding to the service flow, so as to avoid impact on processing of another subsequent service flow. In this embodiment, the method further includes the following steps.

Step 814b: The forwarding plane device determines that the packet of the first service flow is the last packet of the first service flow and that a forwarding plane device is directly connected to the value-added service instance.

When receiving the packet of the first service flow, the forwarding plane device detects whether the packet carries an end identifier. The end identifier may be a special field in a service flow packet, or the like. When detecting that the packet carries the end identifier, the forwarding plane device determines that the packet is the last packet of the first service flow. When the forwarding plane device is directly connected to the value-added service instance, the forwarding plane device determines that the forwarding plane device and the value-added service instance are directly connected.

It should be noted that, a direct connection between the forwarding plane device and the value-added service instance means that no other forwarding plane device that processes service chain information exists between the forwarding plane device and value-added service instance, but a switching device that processes link layer forwarding or a routing device that processes network layer forwarding may be an exception.

As shown in FIG. 7, the forwarding plane device 720 is directly connected to the value-added service instance.

Step 815b: The forwarding plane device sends the packet of the first service flow to the value-added service instance according to the saved packet information of the first service flow.

When determining that the packet of the first service flow is the last packet of the first service flow, the forwarding plane device sends the service flow packet to a corresponding value-added service instance according to the saved packet information of the first service flow. Correspondingly, the value-added service instance processes the received packet of the first service flow and provides a value-added service for the packet.

Step 816b: The forwarding plane device sends the packet of the first service flow to the load balancer, where the packet of the first service flow is used to instruct the load balancer to delete a binding relationship between the first service flow and the value-added service instance.

When the forwarding plane device determines that the received packet of the first service flow is the last packet of the first service flow, the forwarding plane device sends the packet of the first service flow to the load balancer. The packet of the first service flow carries the end identifier, and is used to instruct the load balancer to delete the binding relationship between the first service flow and the value-added service instance.

It should be noted that there is no strict sequence between step 815b and step 816b, and step 815b and step 816b may be concurrently performed. An example in which step 815b is performed before step 816b is used in this embodiment as merely an example for description, and constitutes no limitation to this embodiment.

Step 817b: The load balancer receives the packet that is of the first service flow and that is sent by the forwarding plane device. The forwarding plane device determines that the packet of the first service flow is the last packet of the first service flow.

Step 818b: The load balancer deletes the binding relationship between the first service flow and the value-added service instance according to the packet of the first service flow.

When detecting that the packet of the first service flow carries the end identifier, the load balancer deletes the binding relationship between the first service flow and the value-added service instance according to the packet of the first service flow.

Step 819b: The forwarding plane device sends the packet of the first service flow to the control plane device, where the packet of the first service flow is used to instruct the control plane device to deliver a deletion rule instruction to a forwarding plane device related to the first service flow.

The forwarding plane device sends the packet that is of the first service flow and that carries the end identifier to the control plane device. The packet is used to instruct the control plane device to send an instruction of deleting the saved packet information of the first service flow to all forwarding plane devices on which the packet information of the first service flow is saved.

For example, as shown in FIG. 7, the forwarding plane device 720 sends the packet of the first service flow to the control plane device.

Step 820b: The control plane device receives the packet of the first service flow, where the packet of the first service flow is used to instruct the control plane device to deliver the deletion rule instruction to the forwarding plane device related to the first service flow.

Step 821b: The control plane device delivers, according to the received packet of the first service flow, the deletion rule instruction to the forwarding plane device related to the first service flow.

For example, as shown in FIG. 7, the packet information of the first service flow is saved on the forwarding plane device 710 and the forwarding plane device 720, that is, the forwarding plane device 710 and the forwarding plane device 720 are forwarding plane devices related to the first service flow. The control plane device sends the deletion rule instruction to the forwarding plane device 710 and the forwarding plane device 720.

Step 822b: The forwarding plane device receives the deletion rule instruction sent by the control plane device.

The forwarding plane device 710 and the forwarding plane device 720 receive the deletion rule instruction sent by a control device.

Step 823b: The forwarding plane device deletes the saved packet information of the first service flow.

After sending the last packet of the first service flow to the value-added service instance according to the saved packet information of the first service flow, the forwarding plane device deletes the saved packet information of the first service flow according to the received packet that is of the first service flow and that carries the end identifier.

For example, as shown in FIG. 7, the forwarding plane device 710 and the forwarding plane device 720 receive the deletion rule instruction sent by the control plane device, and delete the saved packet information of the first service flow according to the deletion rule instruction.

In this embodiment, a forwarding plane device sends the last packet of a first service flow to a control plane device, and the control plane device sends a deletion rule instruction to a forwarding plane device related to the first service flow, thereby deleting all packet information of the first service flow.

In a specific implementation process, after a quantity of value-added service instances that provide a same value-added service increases, a service flow packet of an original service flow is still forwarded according to original packet information. However, for a service flow packet of a new service flow, a load balancer needs to allocate a value-added service instance to the new service flow according to a new load status. This is described below by using a specific embodiment.

Referring to FIG. 9A, FIG. 9A shows a schematic structural diagram of an implementation environment related to a service processing method according to still another embodiment of the present invention. The implementation environment includes a forwarding plane device 1, a forwarding plane device 2, a control plane device 920, a load balancer A, a value-added service instance A1, a value-added service A2, and a newly-added value-added service instance A3.

The forwarding plane device 1 and the forwarding plane device 2 are generally routers or switches. The forwarding plane device 1 is connected to the control plane device 920, the load balancer A, the value-added service instance A1, and the value-added service instance A2. The forwarding plane device 2 is connected to the control plane device 920, the load balancer A, and the value-added service instance A3. Both the forwarding plane device 1 and the forwarding plane device 2 are configured to forward a service flow packet.

Before the value-added service instance A3 is added, the forwarding plane device 1 is directly connected to the value-added service instance A1 and the value-added service instance A2. After the value-added service instance A3 is added, the forwarding plane device 1 is still separately and directly connected to the value-added service instance A1 and the value-added service instance A2, and the forwarding plane device 2 is directly connected to the value-added service instance A3. Therefore, when a service flow packet needs to be processed by the value-added service instance A3, the forwarding plane device 1 needs to send the service flow packet to the forwarding plane device 2, and the forwarding plane device 2 sends the service flow packet to the value-added service instance A3.

The control plane device 920 is configured to manage the forwarding plane device 1 and the forwarding plane device 2, and the control plane device 920 is connected to the forwarding plane device 1 and the forwarding plane device 2 by using a wired network or a wireless network.

The value-added service instance A1, the value-added service instance A2, and the value-added service instance A3 are all configured to provide a value-added service A for a service flow. The value-added service instance A1 and the value-added service instance A2 are directly connected to the forwarding plane device 1, and the value-added service instance A3 is directly connected to the forwarding plane device 2. The value-added service instance A1, the value-added service instance A2, and the value-added service instance A3 are connected to the load balancer A.

The load balancer A is configured to allocate, according to a load balancing rule and load statuses of the value-added service instance A1, the value-added service instance A2, and the value-added service instance A3, a value-added service instance to a service flow that requires the value-added service A. The load balancer A is further connected to the forwarding plane device 1 and the forwarding plane device 2.

Referring to FIG. 9B-1, FIG. 9B-2, and FIG. 9B-3, FIG. 9B-1, FIG. 9B-2, and FIG. 9B-3 show a flowchart of a service processing method according to a further embodiment of the present invention. In this embodiment, an example in which the service processing method is applied in the implementation environment shown in FIG. 9A is used for description, and the method may include the following steps.

Step 901: The forwarding plane device 1 receives a packet C1 of a service flow C.

The forwarding plane device 1 obtains the packet C1 that is of the service flow C and that is sent by a classifier (not shown in FIG. 9A). It is assumed that the packet C1 includes service chain information that is the same as that of a packet of a service flow A and that of a packet of a service flow B, that is, the service flow C needs to execute a same value-added service as the service flow A and the service flow B.

For example, the classifier decides that value-added services that need to be executed by a service flow are a value-added service A and a value-added service B, that is, service chain information corresponding to the value-added service A and service chain information corresponding to the value-added service B are added into a service flow packet of the service flow. For another example, the classifier decides that value-added services that need to be executed by another service flow are a value-added service A, a value-added service B, and a value-added service C, that is, service chain information corresponding to the value-added service A, service chain information corresponding to the value-added service B, and service chain information corresponding to value-added service C are added into a service flow packet of the service flow.

Step 902: The forwarding plane device 1 determines whether packet information of the service flow C is saved, where the packet information of the service flow C is used to determine a value-added service instance that is used to process the packet of the service flow C.

Because only packet information of the service flow A and the service flow B exists in the forwarding plane device 1, packet information of the packet C1 of the service flow C does not exist in the forwarding plane device 1.

Step 903. The forwarding plane device 1 sends the packet C1 to the load balancer A.

Because the control plane device sends packet information that is directed to the load balancer to the forwarding plane device 1 and the forwarding plane device 2 in advance, and the packet C1 includes the service chain information that is the same as that of the packet of the service flow A and that of the packet of the service flow B, the forwarding plane device 1 sends the packet C1 of the service flow C to the corresponding load balancer A according to the routing information that is directed to the load balancer.

Step 904: The load balancer A receives the packet C1 sent by the forwarding plane device 1.

Step 905: The load balancer A allocates the value-added service instance that is used to process the packet C1.

The load balancer A allocates, according to a load status of each value-added service instance that provides the current value-added service A, a value-added service instance to the service flow C to which the packet C1 belongs, and records a binding relationship between the service flow C and the value-added service instance. An example in which the load balancer A allocates the newly-added value-added service instance A3 to the service flow C is used in this embodiment for description, but constitutes no limitation to this embodiment.

After allocating the value-added service instance A3 to the service flow C, the load balancer A records a binding relationship between the service flow C and the value-added service instance A3.

Step 906: The load balancer A sends forwarding information to the forwarding plane device 1, where the forwarding information is used to instruct the forwarding plane device 1 to send the packet C1 of the service flow C to the value-added service instance A3.

A specific implementation manner of this step is similar to that of step 606b, and details are not described herein.

Step 907: The forwarding plane device 1 receives the forwarding information sent by the load balancer A, where the forwarding information is used to indicate the value-added service instance that is allocated by the load balancer A and that is used to process the packet C1 of the service flow C.

The forwarding plane device 1 receives a modified packet C1 of the service flow C, where the modified packet C1 of the service flow C includes the forwarding information, and the forwarding information is determined by the load balancer A.

Step 908: The forwarding plane device 1 saves packet information of the service flow C.

The forwarding plane device 1 saves the packet information of the service flow C. When receiving a subsequent packet that is of the service flow C and that is sent by the classifier, the forwarding plane device may determine that packet information of the service flow C is saved, and forward the subsequent packet of the service flow C according to the packet information.

The forwarding plane device 1 may save the packet information according to a storage structure in Table 3.

**Table 3**

| **Match item** | **Match priority** | **Action item** |
|---|---|---|
| 5-tuple C, Service chain identifier=AB, and service chain index=2 | High | Value-added service instance A3 |

The match priority is used to indicate a decision priority sequence according to which the forwarding plane device determines a value-added service instance corresponding to a service flow.

Step 909: The forwarding plane device 1 sends the packet C1 of the service flow C to a forwarding plane device 2.

A specific implementation manner of this step is similar to that of step 610b, and details are not described herein. Because the forwarding plane device 1 is directly connected to the forwarding plane device 2, and the value-added service instance A3 is directly connected to the forwarding plane device 2, the forwarding plane device 1 sends the packet C1 to the forwarding plane device 2.

Correspondingly, the forwarding plane device 2 receives the packet C1 sent by the forwarding plane device 1.

Step 910: The forwarding plane device 2 determines whether packet information of the service flow C is saved, where the packet information of the service flow C is used to determine the value-added service instance that is used to process the packet of the service flow C.

A specific implementation manner of this step is similar to that of step 902, and details are not described herein.

When the forwarding plane device 2 determines that the packet information of the service flow C is not saved, step 911 is performed.

Step 911: The forwarding plane device 2 sends the packet C1 to the load balancer A.

Because the control plane device sends packet information that is directed to the load balancer to the forwarding plane device 1 and the forwarding plane device 2 in advance, and the packet C1 includes the service chain information that is the same as that of the packet of the service flow A and that of the packet of the service flow B, the forwarding plane device 2 sends a packet of a first service flow to a corresponding load balancer according to the routing information that is directed to the load balancer.

Step 912: The load balancer A receives the packet C1 sent by the forwarding plane device 2.

Step 913: The load balancer A allocates the value-added service instance that is used to process the packet C1.

In step 905, the binding relationship between the service flow C to which the packet C1 belongs and the value-added service instance A3 is recorded by the load balancer A. Therefore, the load balancer A does not need to allocate a value-added service instance to the packet C1 according to a load status.

Step 914: The load balancer A sends forwarding information to the forwarding plane device 2, where the forwarding information is used to instruct the forwarding plane device 2 to send the packet C1 of the service flow C to the value-added service instance A3.

A specific implementation manner of this step is similar to that of step 906, and details are not described herein.

Step 915: The forwarding plane device 2 receives the forwarding information sent by the load balancer A, where the forwarding information is used to indicate the value-added service instance that is allocated by the load balancer A and that is used to process the packet C1 of the service flow C.

The forwarding plane device 2 receives a modified packet C1 of the service flow C, where the modified packet C1 of the service flow C includes the forwarding information, and the forwarding information is determined by the load balancer A.

Step 916: The forwarding plane device 2 saves packet information of the service flow C.

The forwarding plane device 2 saves the packet information of the service flow C. A specific implementation manner of this step is similar to that of step 908, and details are not described herein.

Step 917: The forwarding plane device 2 sends the packet C1 of the service flow C to the value-added service instance A3.

A specific implementation manner of this step is similar to that of step 610b, and details are not described herein.

Apparently, when the subsequent packet of the service flow C is sent to the forwarding plane device 1, because the packet information of the service flow C is saved on the forwarding plane device 1, the forwarding plane device 1 sends the subsequent packet to the forwarding plane device 2 according to the packet information, and the forwarding plane device 2 sends the subsequent packet to the value-added service instance A3. The subsequent packet does not need to pass through the load balancer, thereby relieving processing pressure of the load balancer.

In conclusion, in this embodiment, a forwarding plane device sends a packet of a first service flow; the forwarding plane device determines a value-added service instance corresponding to the first service flow; and the forwarding plane device sends the packet of the first service flow to the value-added service instance. In this way, a problem is resolved that a load balancer is heavily loaded because all service flow packets need to be processed by using the load balancer; and generally, the load balancer may only need to allocate a value-added service instance to the first service flow packet in a service flow, thereby relieving processing pressure of the load balancer.

In the background, each service flow packet needs to pass through a load balancer. When there are multiple forwarding plane devices, the service flow packet may further be transmitted between forwarding plane devices and the load balancer in a roundabout manner, which causes transmission redundancy. However, in this embodiment, only the first packet of a service flow needs to pass through the load balancer. In this way, transmission redundancy in a service flow packet transmission process is avoided, no redundant transmission is caused, and transmission efficiency is improved.

In another specific implementation process, migration may occur on a value-added service instance. For example, as shown in FIG. 10, before migration occurs on a value-added service instance A2, a value-added service instance A1 is directly connected to a forwarding plane device 1, and the forwarding plane device 1 directly sends a received service flow packet to the value-added service instance A2. The value-added service instance A2 is directly connected to a forwarding plane device 2. After receiving a service flow packet, the forwarding plane device 1 sends the service flow packet to the forwarding plane device 2 according to saved packet information, and the forwarding plane device 2 sends the service flow packet to the value-added service instance A2 according to the saved packet information.

After migration occurs on the value-added service instance A2, that is, the value-added service instance A2 is directly connected to the forwarding plane device 1 by means of the migration, a control plane device may send a deletion rule instruction to the forwarding plane device 1 and the forwarding plane device 2, so as to instruct the forwarding plane device 1 and the forwarding plane device 2 to delete packet information related to the value-added service instance A2. After receiving the deletion rule instruction, the forwarding plane device 1 and the forwarding plane device 2 delete the packet information that is related to the value-added service instance A2 and that is in the forwarding plane device 1 and the forwarding plane device 2.

When a subsequent service flow packet is sent to the forwarding plane device 1, the forwarding plane device 1 directly sends, according to the service processing method shown in FIG. 7, the subsequent service flow packet to the value-added service instance A2.

After migration occurs on a value-added service instance, a control plane device sends a packet information deletion signal to all forwarding plane devices, so as to instruct all the forwarding plane devices to delete packet information related to the migrated value-added service instance. In this way, a problem is avoided that when migration occurs on a value-added service instance, a forwarding path of a service flow packet is correspondingly changed but useless packet information still exists in the forwarding plane devices; and processing pressure of the forwarding plane device is relieved.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely example embodiments of the present invention, but are not intended to limit the present invention. Any modification, equivalent replacement, and improvement made without departing from the spirit and principle of the present invention shall fall within the protection scope of the present invention.

## Claims

1. A service processing apparatus, wherein the apparatus comprises:
a packet receiving module, configured to receive a packet of a first service flow;
an instance determining module, configured to determine a value-added service instance corresponding to the first service flow; and
a packet sending module, configured to send the packet of the first service flow to the value-added service instance.

2. The apparatus according to claim 1, wherein the instance determining module comprises:
a first packet sending module, configured to send the packet of the first service flow to a load balancer; and
a forwarding information receiving module, configured to receive forwarding information sent by the load balancer, wherein the forwarding information is used to indicate the value-added service instance that is allocated by the load balancer and that is used to process the packet of the first service flow.

3. The apparatus according to claim 2, wherein the forwarding information receiving module comprises:
a modified packet receiving unit, configured to receive a modified packet of the first service flow, wherein the modified packet of the first service flow comprises the forwarding information, and the forwarding information is determined by the load balancer.

4. The apparatus according to claim 2, wherein the forwarding information is a first relationship entry, the first relationship entry comprises a match item and an action item, the match item is used to match the packet of the first service flow, and the action item is used to indicate the value-added service instance that is used to process the packet of the first service flow.

5. The apparatus according to any one of claims 2 to 4, wherein the first packet sending module comprises:
a first packet sending unit, configured to send the packet of the first service flow to the load balancer when packet information of the first service flow is not saved.

6. The apparatus according to claim 5, wherein the apparatus further comprises:
a packet information storing module, configured to save the packet information of the first service flow.

7. The apparatus according to claim 5 or 6, wherein the instance determining module further comprises:
a corresponding instance determining module, configured to: when the packet information of the first service flow is saved, determine, according to the saved packet information of the first service flow, the value-added service instance corresponding to the first service flow.

8. The apparatus according to any one of claims 5 to 7, wherein the packet information comprises at least one of the following: 5-tuple information, service chain information of the packet of the first service flow, and an identifier of the value-added service instance corresponding to the first service flow, wherein
the 5-tuple information comprises at least one of a source IP address, a destination IP address, a source port, a destination port, and a protocol number, and the service chain information is used to indicate a value-added service that needs to be executed by the packet of the first service flow.

9. The apparatus according to any one of claims 1 to 8, wherein the apparatus further comprises:
a packet information receiving module, configured to receive the packet information that is of the first service flow and that is sent by a control plane device.

10. The apparatus according to any one of claims 1 to 9, wherein the packet sending module comprises:
a next-hop identifier generation module, configured to generate a next-hop identifier according to the value-added service instance corresponding to the first service flow; and
a second packet sending module, configured to send the packet of the first service flow to the value-added service instance according to the next-hop identifier.

11. The apparatus according to any one of claims 6 to 9, wherein the apparatus further comprises:
a first determining module, configured to determine that the packet of the first service flow is the last packet of the first service flow; and
a first deletion module, configured to delete the saved packet information of the first service flow.

12. The apparatus according to any one of claims 1 to 10, wherein the apparatus further comprises:
a second determining module, configured to determine that the packet of the first service flow is the last packet of the first service flow and that a forwarding plane device is directly connected to the value-added service instance; and
a first sending module, configured to send the packet of the first service flow to the load balancer, wherein the packet of the first service flow is used to instruct the load balancer to delete a binding relationship between the first service flow and the value-added service instance.

13. The apparatus according to any one of claims 1 to 10, wherein the apparatus further comprises:
a third determining module, configured to determine that the packet of the first service flow is the last packet of the first service flow and that a forwarding plane device is directly connected to the value-added service instance;
a second sending module, configured to send the packet of the first service flow to a control plane device, wherein the packet of the first service flow is used to instruct the control plane device to deliver a deletion rule instruction to a forwarding plane device related to the first service flow; and
a second deletion module, configured to receive the deletion rule instruction sent by the control plane device and delete the saved packet information of the first service flow according to the deletion rule instruction.

14. A service processing apparatus, comprising: a processor, configured to control a receiver to receive a packet of a first service flow; wherein
the processor is configured to determine a value-added service instance corresponding to the first service flow, and
the processor is further configured to control a transmitter to send the packet of the first service flow to the value-added service instance.

15. The service processing apparatus according to claim 14, wherein
the processor is further configured to control the transmitter to send the packet of the first service flow to a load balancer; and
the processor is further configured to control the receiver to receive forwarding information sent by the load balancer, wherein the forwarding information is used to indicate the value-added service instance that is allocated by the load balancer and that is used to process the packet of the first service flow.

16. The service processing apparatus according to claim 15, wherein
the processor is further configured to control the receiver to receive a modified packet of the first service flow, wherein the modified packet of the first service flow comprises the forwarding information, and the forwarding information is determined by the load balancer.

17. The service processing apparatus according to claim 15, wherein the forwarding information is a first relationship entry, the first relationship entry comprises a match item and an action item, the match item is used to match the packet of the first service flow, and the action item is used to indicate the value-added service instance that is used to process the packet of the first service flow.

18. The service processing apparatus according to any one of claims 15 to 17, wherein
the processor is further configured to control, when packet information of the first service flow is not saved, the transmitter to send the packet of the first service flow to the load balancer.

19. The service processing apparatus according to claim 18, wherein the apparatus further comprises a memory, and
the processor is further configured to control the memory to save the packet information of the first service flow.

20. The service processing apparatus according to claim 18 or 19, wherein
the processor is further configured to: when the packet information of the first service flow is saved, determine, according to the saved packet information of the first service flow, the value-added service instance corresponding to the first service flow.

21. The service processing apparatus according to any one of claims 18 to 20, wherein the packet information comprises at least one of the following: 5-tuple information, service chain information of the packet of the first service flow, and an identifier of the value-added service instance corresponding to the first service flow, wherein
the 5-tuple information comprises at least one of a source IP address, a destination IP address, a source port, a destination port, and a protocol number, and the service chain information is used to indicate a value-added service that needs to be executed by the packet of the first service flow.

22. The service processing apparatus according to any one of claims 14 to 21, wherein
the processor is further configured to control the receiver to receive the packet information that is of the first service flow and that is sent by a control plane device.

23. The service processing apparatus according to any one of claims 14 to 22, wherein
the processor is further configured to generate a next-hop identifier according to the value-added service instance corresponding to the first service flow; and
the processor is further configured to control the transmitter to send the packet of the first service flow to the value-added service instance according to the next-hop identifier.

24. The service processing apparatus according to any one of claims 14 to 23, wherein the apparatus further comprises a memory;
the processor is further configured to determine that the packet of the first service flow is the last packet of the first service flow; and
the processor is further configured to control the memory to delete the saved packet information of the first service flow.

25. The service processing apparatus according to any one of claims 14 to 23, wherein
the processor is further configured to determine that the packet of the first service flow is the last packet of the first service flow and that a forwarding plane device is directly connected to the value-added service instance; and
the processor is further configured to control the transmitter to send the packet of the first service flow to the load balancer, wherein the packet of the first service flow is used to instruct the load balancer to delete a binding relationship between the first service flow and the value-added service instance.

26. The service processing apparatus according to any one of claims 14 to 23, wherein
the processor is further configured to determine that the packet of the first service flow is the last packet of the first service flow and that a forwarding plane device is directly connected to the value-added service instance;
the processor is further configured to control the transmitter to send the packet of the first service flow to a control plane device, wherein the packet of the first service flow is used to instruct the control plane device to deliver a deletion rule instruction to a forwarding plane device related to the first service flow; and
the processor is further configured to control the receiver to receive the deletion rule instruction sent by the control plane device and delete the saved packet information of the first service flow according to the deletion rule instruction.

27. A service processing method, wherein the method comprises:
receiving, by a forwarding plane device, a packet of a first service flow;
determining, by the forwarding plane device, a value-added service instance corresponding to the first service flow, and
sending, by the forwarding plane device, the packet of the first service flow to the value-added service instance.

28. The method according to claim 27, wherein the determining, by the forwarding plane device, a value-added service instance corresponding to the first service flow comprises:
sending, by the forwarding plane device, the packet of the first service flow to a load balancer; and
receiving, by the forwarding plane device, forwarding information sent by the load balancer, wherein the forwarding information is used to indicate the value-added service instance that is allocated by the load balancer and that is used to process the packet of the first service flow.

29. The method according to claim 28, wherein the receiving, by the forwarding plane device, forwarding information sent by the load balancer comprises:
receiving, by the forwarding plane device, a modified packet of the first service flow, wherein the modified packet of the first service flow comprises the forwarding information, and the forwarding information is determined by the load balancer.

30. The method according to claim 28, wherein the forwarding information is a first relationship entry, the first relationship entry comprises a match item and an action item, the match item is used to match the packet of the first service flow, and the action item is used to indicate the value-added service instance that is used to process the packet of the first service flow.

31. The method according to any one of claims 28 to 30, wherein the sending, by the forwarding plane device, the packet of the first service flow to a load balancer comprises:
sending, by the forwarding plane device, the packet of the first service flow to the load balancer when packet information of the first service flow is not saved.

32. The method according to claim 31, wherein the method further comprises:
storing, by the forwarding plane device, the packet information of the first service flow.

33. The method according to claim 31 or 32, wherein the determining, by the forwarding plane device, a value-added service instance corresponding to the first service flow further comprises:
when the packet information of the first service flow is saved, determining, by the forwarding plane device according to the saved packet information of the first service flow, the value-added service instance corresponding to the first service flow.

34. The method according to any one of claims 31 to 33, wherein the packet information comprises at least one of the following: 5-tuple information, service chain information of the packet of the first service flow, and an identifier of the value-added service instance corresponding to the first service flow, wherein
the 5-tuple information comprises at least one of a source IP address, a destination IP address, a source port, a destination port, and a protocol number, and the service chain information is used to indicate a value-added service that needs to be executed by the packet of the first service flow.

35. The method according to any one of claims 27 to 34, wherein before the receiving, by a forwarding plane device, a packet of a first service flow, the method further comprises:
receiving, by the forwarding plane device, the packet information that is of the first service flow and that is sent by a control plane device.

36. The method according to any one of claims 27 to 35, wherein the sending, by the forwarding plane device, the packet of the first service flow to the value-added service instance comprises:
generating, by the forwarding plane device, a next-hop identifier according to the value-added service instance corresponding to the first service flow; and
sending, by the forwarding plane device, the packet of the first service flow to the value-added service instance according to the next-hop identifier.

37. The method according to any one of claims 32 to 35, wherein after the sending, by the forwarding plane device, the packet of the first service flow to the value-added service instance, the method further comprises:
determining, by the forwarding plane device, that the packet of the first service flow is the last packet of the first service flow; and
deleting, by the forwarding plane device, the saved packet information of the first service flow.

38. The method according to any one of claims 27 to 36, wherein the method further comprises:
determining, by the forwarding plane device, that the packet of the first service flow is the last packet of the first service flow and that the forwarding plane device is directly connected to the value-added service instance; and
sending, by the forwarding plane device, the packet of the first service flow to the load balancer, wherein the packet of the first service flow is used to instruct the load balancer to delete a binding relationship between the first service flow and the value-added service instance.

39. The method according to any one of claims 27 to 36, wherein the method further comprises:
determining, by the forwarding plane device, that the packet of the first service flow is the last packet of the first service flow and that the forwarding plane device is directly connected to the value-added service instance;
sending, by the forwarding plane device, the packet of the first service flow to the control plane device, wherein the packet of the first service flow is used to instruct the control plane device to deliver a deletion rule instruction to a forwarding plane device related to the first service flow; and
receiving, by the forwarding plane device, the deletion rule instruction sent by the control plane device and delete the saved packet information of the first service flow according to the deletion rule instruction.
